# EUROPEAN PATENT SPECIFICATION

(11) **EP 4 146 408 B1**
(45) Date of publication and mention of the grant of the patent: **24.04.2024**
(21) Application number: 21722255.3
(22) Date of filing: 04.05.2021
(51) Int. Cl.: B05D 5/06, B05D 7/00

(54) **COATING SYSTEMS WITH INCREASED JETNESS OF BLACK AND IMPROVED COLOR**
BESCHICHTUNGSSYSTEME MIT ERHÖHTER FARBTIEFE VON SCHWARZ UND VERBESSERTE FARBE
SYSTÈMES DE REVÊTEMENT À PROFONDEUR DE NOIR ACCRU ET COULEUR AMÉLIORÉE

(30) Priority: 04.05.2020 EP 20172676
(43) Date of publication of application: 15.03.2023
(73) Proprietor: BASF Coatings GmbH, 48165 Münster (DE)
(72) Inventor: FERRIS, Daniel, Patrick, Southfield, Michigan 48033 (US); GARCIA, Rosalva, Castrejon, Charlotte, North Carolina 28273 (US); CAMPBELL, Donald, H., Southfield, MI 48033 (US)
(74) Representative: BASF IP Association
(86) International application number: PCT/EP2021/061684
(87) International publication number: WO 2021/224232

(56) References cited:
- WO-A1-2012/170230
- US-A1- 2003 185 993

## Description

The present invention relates to a method of preparing a multilayer coating system on a substrate comprising a step of applying at least one organic black pigment containing basecoat composition to a substrate and forming a first coating film thereon (1), optionally subsequently applying a second basecoat composition and forming a second coating film adjacent to the first coating film (2), and applying a pigmented topcoat composition to the first coating film in case optional step (2) is not performed (3a), or applying a clearcoat composition to the second coating film in case optional step (2) is performed, wherein none of the second basecoat and the topcoat or clearcoat composition comprises any black pigments, and wherein the second basecoat composition - in case steps (1), (2) and (3b) are performed - or the topcoat composition - in case steps (1) and (3a) are performed - comprises at least one non-black coloring pigment having a volume average particle size of <1000 nm in an amount in the range of from 0.01 to 7.50 wt.-%, based on its total solid content, incorporated therein in the form of a pigment paste, and a multilayer coating system and a coated substrate obtainable therefrom.

### Background of the invention

In particular in the field of automotive coatings dark colors such as black colors are desirable for aesthetic purposes. However, dark colored coatings are susceptible to absorption of near-infrared radiation because they often rely on the use of pigments, such as carbon black, that absorb near infrared (NIR) radiation in addition to visible radiation. Heat is a consequence of the absorption of near-infrared radiation and consequently dark colored coatings are susceptible to substantially increased temperatures. Attempts have been made to replace carbon black with organic black pigments such as perylene pigment in order to reduce occurring heat. However, a problem associated therewith is often that the jetness of black achieved with such systems is less than that achieved with carbon black, which is undesired.

JP 2014-210856 A discloses a coating composition comprising both a black pigment that reflects and/or transmits infrared (IR) radiation and a transparent blue pigment combined in one single composition with a low lightness L*. The coating composition is used for applying a basecoat film on a substrate. Then, a clearcoat composition is applied on top. JP 2014-210856 A aims at providing a coating having a black color and heat shielding properties.

Similarly, WO 2012/170230 A1 (US 2012/0308724 A1) relates to a coating composition comprising at least two visibly absorbing infrared transparent pigments being present combined in one single composition for preparing a coating having a jetness of at least 240. This includes blends of non-black pigments with IR transparent black pigments in the basecoat layer in order to increase the jetness of the resulting coating. WO 2012/170230 A1 is concerned with providing coatings exhibiting a jet black color and being transparent to IR radiation.

US 2008/0187708 A1 also relates to a coating system displaying a dark color comprising a first layer containing IR reflective pigments and a second layer exhibiting a dark color, being substantially transparent to IR radiation and comprising a tint containing in turn nanoparticle pigments, in particular blends thereof. US 2008/0187708 A1 aims at providing coatings that exhibit a dark color and minimally absorb radiation in the near infrared spectrum.

WO 2013/037928 A1 discloses a coating formed on a substrate inter alia comprising an organic and/or inorganic pigment such as a NIR transparent pigment as well as a dye having a transmittance of at least 75% in the range of from 700 to 2500 nm. WO 2013/037928 A1 is concerned with providing coatings having high brilliance and improved jetness and chroma properties. However, the use of dyes as disclosed in WO 2013/037928 A1 often results in only poor durability and, further, any color improvement achieved often fades upon exposure to UV light.

Although using pigment blends such as the ones disclosed in WO 2012/170230 A1 and US 2008/0187708 A1 in basecoats may positively affect jetness of black values, the jetness of the resulting coatings is nonetheless not always sufficient, in particular is still less than achieved with corresponding carbon black containing coatings. Further, the visual appearance of these basecoat coatings is not always sufficient, in particular still falls short of carbon black containing basecoats when inspected visually. In particular, coatings of the prior art often exhibit an undesired brown/reddish undertone. In addition, the lightness of the coatings is often still too high.

Thus, there is a need to provide coatings and coating systems, which exhibit an improved jetness compared to the coatings and coating systems known in the prior art. At the same time, these coatings and coating systems ought to have an excellent visual appearance, an improved color and should in particular not exhibit an undesired brown/reddish undertone.

### Problem

It has been therefore an object underlying the present invention to provide coatings and coating systems, which exhibit an improved jetness compared to coatings and coating systems known in the prior art and which, at the same time, display an excellent visual appearance, have an improved color and do in particular not exhibit any undesired brown/reddish undertone.

### Solution

This object has been solved by the subject-matter of the claims of the present application as well as by the preferred embodiments thereof disclosed in this specification, i.e. by the subject matter described herein.

A first subject-matter of the present invention is a method of preparing a multilayer coating system onto an optionally pre-coated substrate comprising at least steps (1) and (3a) or at least steps (1), (2) and (3b), namely
(1) applying a pigmented basecoat composition to an optionally pre-coated substrate and forming a first coating film on the optionally pre-coated substrate, wherein the basecoat composition comprises at least one black organic pigment,
(2) optionally applying a second pigmented basecoat composition different from the basecoat composition applied in step (1) to the first coating film present on the substrate obtained after step (1) and forming a second coating film adjacent to the first coating film, and
(3a) applying a coating composition different from the composition applied in step (1) and in optional step (2) to the first coating film present on the substrate obtained after step (1) and forming a second coating film adjacent to the first coating film in case optional step (2) is not performed, wherein the coating composition is a pigmented topcoat composition, or
(3b) applying a coating composition different from the composition applied in step (1) and in optional step (2) to the second coating film present on the substrate obtained after step (2) and forming a third coating film adjacent to the second coating film in case optional step (2) is performed, wherein the coating composition is a clearcoat composition,
wherein the second coating film obtained after step (3a) or the third coating film obtained after step (3b) is the outermost film of the formed multilayer coating system,
characterized in that neither the second basecoat composition applied in optional step (2) nor the coating composition applied in step (3a) or (3b) comprises any black pigments, and, further, in that - in case steps (1), (2) and (3b) are performed - the second basecoat composition or - in case steps (1) and (3a) are performed - the topcoat composition comprises at least one non-black coloring pigment having a volume average particle size of <1000 nm in an amount in the range of from 0.01 to 7.50 wt.-%, based in each case on the total solid content of the respective composition, wherein said at least one non-black coloring pigment is in each case incorporated into the respective composition in the form of a pigment paste.

A further subject-matter of the present invention is a multilayer coating system present on an optionally pre-coated substrate, characterized in that it is obtainable by the inventive method.

A further subject-matter of the present invention is a coated substrate obtainable by the inventive method.

A further subject-matter of the present invention is a use of a pigmented coating composition,
which does not comprise any black pigments, comprises at least one non-black coloring pigment having a volume average particle size of <1000 nm in an amount in the range of from 0.01 to 7.50 wt.-%, based on the total binder solid content of the coating composition, wherein said at least one non-black coloring pigment is incorporated into the coating composition in the form of a pigment paste,
in either step (2) as second basecoat composition or in step (3a) as topcoat composition of the method of preparing a multilayer coating system onto an optionally pre-coated substrate as defined in the inventive method
for increasing the jetness (Mc) of the multilayer coating system obtained after curing to such an extent that the jetness (Mc) exceeds the blackness (My) of the cured multilayer coating system.

It has been in particular surprisingly found that an excellent jetness (Mc) of black can be achieved by the inventive method and the inventive multilayer coating system. This is especially useful in the case of IR reflective blacks as the currently available pigments and resulting conventional coatings are less jet than the standard carbon black pigment, which use, is, however, undesired.

It has been particularly surprisingly found that by tinting a clearcoat composition used in a 2C1B-process to form a topcoat composition or by tinting a second basecoat composition not containing any black pigments in a 3C1B-process with the inventively used non-black coloring pigment wavelengths of light can be absorbed that would otherwise be reflected by the black pigment being present in the (first) basecoat used in both the 2C1B and 3C1B process, which would in turn result in undesirable coloristic properties.

In particular, it has been surprisingly found that the overall jetness (Mc) of the inventive multilayer coatings cannot only be improved, but can be improved so such an extent that the jetness (Mc) values exceed the blackness values (My) of the coatings such that due to a positive value of the undertone dM being >0 (dM = Mc - My) no reddish/brown undertone is achieved, but rather a differently colored undertone such as, for example, a blue or bluish or green or greenish or purple or purplish undertone, depending on the kind(s) of the at least non-black coloring pigment used.

Surprisingly, the use of a clearcoat tinted with the inventively used non-black coloring pigment and/or of an accordingly tinted second basecoat surprisingly provides a quick and unique method to increase the jetness (Mc) of black pigments by increasing the absorption of the targeted wavelengths in the visible spectrum, in particular of solid black pigments. This strategy enables a higher percentage of absorption of all wavelengths across the visible spectrum which results in deeper black colors. These deeper black colors cannot be obtained through the current state-of-the-art techniques of tinting the basecoat in a 2C1B process as, e.g., disclosed in WO 2012/170230 A1.

It has been surprisingly found that an incorporation of an inventively used non-black coloring pigment in a coating film being present above an organic black pigment containing basecoat layer can significantly improve both the blackness (My) and the jetness (Mc) of black to at least equal or in particular exceed carbon black. At the same time a significant reduction of occurring heat can be achieved, which is not possible with carbon black containing basecoats.

In particular, it has been further surprisingly found that the lightness (L*) and in particular the b*-color value of the inventive multilayer coatings can be improved, i.e. minimized/shifted towards zero or below zero.

In particular, it has been found that adding additional pigments to a black basecoat, i.e. to use pigment blends comprising a black pigment in one single basecoat, to improve jetness as disclosed in WO 2012/170230 A1 does not lead to acceptable results. Although in some case the jetness values can be increased, the visual impression of jetness is not sufficiently improved. This visual impression could surprisingly, however, dramatically be improved when tinting the clearcoat composition to form a topcoat composition used in a 2C1B-process to be applied on top of a black basecoat film and/or by tinting a second basecoat composition not containing any black pigments in a 3C1B-process to be applied on top of a black basecoat film with the inventively used non-black coloring pigment. This is demonstrated in detail in the experimental section and is, for example summarized in item **6.** of the experimental section.

It has been in particular surprisingly found in that by tinting a clearcoat composition used in a 2C1B-process to form a topcoat composition or by tinting a second basecoat composition not containing any black pigments in a 3C1B-process with the inventively used pigment not only the jetness of the overall coating is increased and not only to an extent in that the jetness values exceed the blackness values, but that at the same time the chromaticity of color depth is reduced, which is desirable (compared to a coating system containing a first black basecoat with an untinted clearcoat or without a midcoat, i.e. without a second basecoat), in contrast to what is aimed to achieve according to WO 2013/037928 A1.

### Detailed description of the invention

The term "comprising" in the sense of the present invention, in connection for example with the coating compositions used in the inventive method, preferably has the meaning of "consisting of". With regard, e.g., to the second basecoat composition or to the topcoat coating composition, it is possible - in addition to all mandatory components present therein - for one or more of the further components identified hereinafter and included optionally therein to be also included therein. All components may in each case be present in their preferred embodiments as identified below.

The proportions and amounts in wt.-% (% by weight) of any of the constituents given hereinafter, which are present in each of the coating compositions add up to 100 wt.-%, based in each case on the total weight of the respective composition.

Each of the coating compositions used in steps (1), (2), (3a) and (3b) may contain - besides the additionally constituent outlined in more detail hereinafter - one or more commonly used additives depending on the desired application. For example, each of the coating compositions may comprise independently of one another at least one additive selected from the group consisting of reactive diluents, light stabilizers, antioxidants, deaerators, emulsifiers, slip additives, polymerization inhibitors, plasticizers, initiators for free-radical polymerizations, adhesion promoters, flow control agents, film-forming auxiliaries, sag control agents (SCAs), flame retardants, corrosion inhibitors, siccatives, thickeners, biocides and/or matting agents. They can be used in the known and customary proportions. Preferably, their content, based on the total weight of each the coating composition is 0.01 to 20.0 wt.-%, more preferably 0.05 to 15.0 wt.-%, particularly preferably 0.1 to 10.0 % By weight, most preferably from 0.1 to 7.5% by weight, especially from 0.1 to 5.0% by weight and most preferably from 0.1 to 2.5% by weight.

### Inventive method

The inventive method is a method of preparing a multilayer coating system onto an optionally pre-coated substrate comprising at least steps (1) and (3a) or at least steps (1), (2) and (3b).

Preferably, all these steps are performed via spray application.

The first and second or the first, second, and third coating films formed on the optionally pre-coated substrate by performing at least steps (1) and (3a) or at least steps (1), (2) and (3b) are at this stage preferably each uncured coating films. Thus, the coating compositions applied in each of these steps are preferably applied wet-on-wet.

The method of the invention is particularly suitable for the coating of automotive vehicle bodies or parts thereof including respective metallic substrates, but also plastic substrates such as polymeric substrates. Consequently, the preferred substrates are automotive vehicle bodies or parts thereof.

Suitability as metallic substrates used in accordance with the invention are all substrates used customarily and known to the skilled person. The substrates used in accordance with the invention are preferably metallic substrates, more preferably selected from the group consisting of steel, preferably steel selected from the group consisting of bare steel, cold rolled steel (CRS), hot rolled steel, galvanized steel such as hot dip galvanized steel (HDG), alloy galvanized steel (such as, for example, Galvalume, Galvannealed or Galfan) and aluminized steel, aluminum and magnesium, and also Zn/Mg alloys and Zn/Ni alloys. Particularly suitable substrates are parts of vehicle bodies or complete bodies of automobiles for production.

Preferably, thermoplastic polymers are used as plastic substrates. Suitable polymers are poly(meth)acrylates including polymethyl(meth)acrylates, polybutyl (meth)acrylates, polyethylene terephthalates, polybutylene terephthalates, polyvinylidene fluorides, polyvinyl chlorides, polyesters, including polycarbonates and polyvinyl acetate, polyamides, polyolefins such as polyethylene, polypropylene, polystyrene, and also polybutadiene, polyacrylonitrile, polyacetal, polyacrylonitrile-ethylene-propylene-diene-styrene copolymers (A-EPDM), ASA (acrylonitrile-styrene-acrylic ester copolymers) and ABS (acrylonitrile-butadiene-styrene copolymers), polyetherimides, phenolic resins, urea resins, melamine resins, alkyd resins, epoxy resins, polyurethanes, including TPU, polyetherketones, polyphenylene sulfides, polyethers, polyvinyl alcohols, and mixtures thereof. Polycarbonates and poly(meth)acrylates are especially preferred.

The substrate used in accordance with the invention is preferably a metallic substrate pretreated with at least one metal phosphate such as zinc phosphate and/or pretreated with at least one an oxalate. A pretreatment of this kind by means of phosphating, which takes place normally after the substrate has been cleaned and before the substrate is electrodeposition-coated, is in particular a pretreatment step that is customary in the automobile industry.

As outlined above the substrate used may be a pre-coated substrate, i.e. a substrate bearing at least one cured coating film. The substrate used in step (1) can be pre-coated with a cured electrodeposition coating layer. The substrate can, e.g., be provided additionally or alternatively with at least one cured or uncured primer coating film as at least one additional pre-coat. The term "primer" is known to a person skilled in the art. A primer typically is applied after the substrate has been provided with a cured electrodeposition coating layer. In case a cured primer coating film is also present, the cured electrodeposition coating film is present underneath and preferably adjacent to the cured primer coating film. Curing of this primer may take place at temperatures in the range of from 40 to 140°C and may in particular include a "low baking" step at a temperature in the range of from 80 to 100°C. As outlined above a substrate provided with an uncured primer coating film may also be used, in particular a substrate such as a metallic substrate bearing a cured electrodeposition coating film, onto which said uncured primer coating film is present. The inventive method thus may comprise an additional step to be performed prior to step (1), according to which a primer composition is applied to an optionally pre-coated substrate and forming a primer coating film on the optionally pre-coated substrate. Step (1) of the inventive method is then preferably subsequently performed before curing of said primer coating film has taken place, optionally and preferably after a flash-off period such as a flash-off period of 1 to 20 minutes, preferably at a temperature not exceeding 40°C, such as at a temperature in the range of from 18 to 30°C.

The basecoat compositions applied in step (1) and optionally step (2) are each preferably aqueous, i.e. waterborne, coating compositions, whereas the coating composition applied in step (3a) or (3b) is preferably non-aqueous, i.e. solventborne (organic solvent(s) based). However, as it will be hereinafter outlined in more detail the basecoat compositions applied in step (1) and optionally step (2) may alternatively be solventborne basecoat compositions. Likewise, the coating composition applied in step (3a) or (3b) may also be aqueous. Preferably, the basecoat compositions applied in step (1) and optionally step (2) are 1K- (one-component) or 2K- (two components) compositions, more preferably 1K-compositions. Preferably, the coating composition applied in step (3a) or (3b) is a 1K- or 2K-composition, more preferably a 2K-composition.

The term "solventborne" or "non-aqueous" is understood preferably for the purposes of the present invention to mean that organic solvent(s), as solvent and/or as diluent, is/are present as the main constituent of all solvents and/or diluents present in the coating composition applied in step (3a) or (3b) if these are solventborne or in any of the basecoat compositions if at least one of these is solventborne - and also preferably in any pigment paste used for preparing said composition -, preferably in an amount of at least 35 wt.-%, based on the total weight of the coating composition. The coating composition applied in step (3a) or (3b) preferably includes an organic solvent(s) fraction of at least 40 wt.-%, more preferably of at least 45 wt.-%, very preferably of at least 50 wt.-%, based in each case on the total weight of the coating composition. All conventional organic solvents known to those skilled in the art can be used as organic solvents. The term "organic solvent" is known to those skilled in the art, in particular from Council Directive 1999/13 / EC of 11 March 1999. Examples of such organic solvents would include heterocyclic, aliphatic, or aromatic hydrocarbons, mono- or polyhydric alcohols, especially methanol and/or ethanol, ethers, esters, ketones, and amides, such as, for example, N-methylpyrrolidone, N-ethylpyrrolidone, dimethylformamide, toluene, xylene, butanol, ethyl glycol and butyl glycol and also their acetates, butyl diglycol, diethylene glycol dimethyl ether, cyclohexanone, methyl ethyl ketone, methyl isobutyl ketone, acetone, isophorone, or mixtures thereof. The coating composition applied in step (3a) or (3b) preferably is free or essentially free of water. In case not only the coating composition applied in step (3a) or (3b) but also one or both of the basecoat compositions applied in step (1) and optionally step (2), is/are solventborne, the above also applies to these basecoat compositions.

The term "waterborne" or "aqueous" is understood preferably for the purposes of the present invention to mean that water is present as the main constituent of all solvents and/or diluents present in the basecoat compositions applied in step (1) and optionally step (2), and also preferably in any pigment paste used for preparing said composition(s) -, preferably in an amount of at least 35 wt.-%, based on the total weight of the coating composition, in case one or both of these basecoat compositions are aqueous. Each of the aforementioned basecoat compositions in this case preferably includes a water fraction of at least 40 wt.-%, more preferably of at least 45 wt.-%, very preferably of at least 50 wt.-%, based in each case on the total weight of the coating composition. The a fraction of organic solvent(s) is preferably < 20 wt.-%, more preferably in a range of from 0 to < 20 wt.-%, very preferably in a range of from 0.5 to 20 wt.-% or to 17.5 wt.-% or to 15 wt.-% or to 10 wt.-%, based in each case on the total weight of the coating composition. In case also one or both of the coating compositions applied in step (3a) or (3b) is/are aqueous, the above also applies to these coating compositions.

### Step (1) and first basecoat composition

According to step (1) a pigmented basecoat composition is applied to an optionally pre-coated substrate and a first coating film on the optionally pre-coated substrate is formed, wherein the basecoat composition comprises at least one organic black pigment. The basecoat composition used in step (1) of the inventive method is hereinafter also referred to as "first basecoat composition". The basecoat composition used in step (1) can be solventborne (non-aqueous) or aqueous.

Preferably, the inventive method further comprises a step (1a), which is carried out after step (1) and before optional step (2). In said step (1a) the first coating film obtained after step (1) is flashed-off before applying the second basecoat composition in optional step (2) or before applying the topcoat composition in step (3a), preferably for a period of 1 to 20 minutes, more preferably for a period of 2 to 15 minutes, in particular for a period of 5 to 10 minutes. Preferably, step (1a) is performed at a temperature not exceeding 40°C, more preferably at a temperature in the range of from 18 to 30°C.

The term "flashing off" in the sense of the present invention preferably means a drying, wherein at least some and/or some amounts of the solvents (water and/or organic solvent(s)) are evaporated from the coating film, before the next coating composition is applied and/or a curing is carried out. No curing is performed by the flashing-off.

The term "pigment" is known to the skilled person, from DIN 55943 (date: October 2001), for example. A "pigment" in the sense of the present invention refers preferably to a component in powder or flake form which is substantially, preferably entirely, insoluble in the medium surrounding them, such as in one of the inventively used coating compositions, for example. Pigments are preferably colorants and/or substances which can be used as pigment on account of their magnetic, electrical and/or electromagnetic properties. Pigments differ from "fillers" preferably in their refractive index, which for pigments is ≥ 1.7. The term "filler" is known to the skilled person, from DIN 55943 (date: October 2001), for example.

The at least one black pigment present in the first basecoat composition is an organic black pigment, more preferably at least one IR-transparent organic black pigment, in particular at least one perylene and/or azomethine pigment. Most preferred are black pigments nos. 31 and 32 (P.B. 31 and P.B. 32), in particular P.B. 32. Such pigments are commercially available. An example is Paliogen^{®} Black L 0086. Another example of a suitable organic black pigment is Chromofine^{®} Azo Black A-1103 (Dainichiseika Chemicals).

Preferably, the basecoat composition used in step (1) of the inventive method does not contain any other black pigments besides the at least one organic black pigment such as black inorganic pigments. In particular, the basecoat composition used in step (1) of the inventive method does not contain any carbon black pigment.

Preferably, the at least one organic black pigment present in the first basecoat composition has a volume average particle size in the range of from 10 nm to <1 000 nm, preferably of from 25 nm to 800 nm, more preferably of from 30 nm to 600 nm, in particular of from 40 nm to <500 nm, most preferred of from 50 nm to 300 nm.

Preferably, the at least one organic black pigment present in the first basecoat composition has a Z-average particle size in the range of from 10 nm to <1 000 nm, preferably of from 25 nm to 800 nm, more preferably of from 30 nm to 600 nm, in particular of from 40 nm to <500 nm, most preferred of from 50 nm to 300 nm.

Preferably, the at least one organic black pigment present in the first basecoat composition has a number-based median primary particle size (d_{N,50%}) in the range of from 10 nm to 700 nm, preferably of from 25 nm to 500 nm, more preferably of from 30 nm to 350 nm, in particular of from 50 nm to 250 nm. The term number-based median particle size (d_{N,50%}) is a parameter known to a person skilled in the art. The characteristic variable labeled with the lower-case letter "d" is the percentile (50%) of the cumulative distribution curve with the 50% percentile corresponding to the median. The index "N" pertains to the number-based distribution.

Volume average particle size, Z-average particle size and number-based median primary particle size are determined by DLS according to the method described in the 'Methods' section hereinafter.

An aqueous or non-aqueous pigment paste comprising the at least one organic black pigment is used for preparing the first basecoat composition, depending on whether the basecoat composition used in step (1) is solventborne (non-aqueous) or aqueous.

Preferably, the pigment paste containing the at least one organic black pigment, which is used for preparing the first basecoat composition has a haze of <15%, preferably of <10%, more preferably of <7.5%.

The term "haze" is known to a person skilled in the art. Haze is a measurement of the transparency as defined in ASTM D 1003. The method for measuring the haze of the inventively used (and comparatively used) pigment pastes is described in the 'Methods' section hereinafter.

Volume average particle size, Z-average particle size and number-based median primary particle size as well as haze can be adjusted/reduced by subjecting the organic black pigment present in form of a pigment paste to milling conditions in a mill. The milling process is in more detail outlined hereinafter in connection with the inventively used non-black coloring pigment and can also be applied to the organic black pigment and pigment pastes comprising said pigment.

Preferably, the at least one organic black pigment is the only pigment in the basecoat composition used in step (1) of the inventive method. However, the basecoat composition used in step (1) may alternatively comprise at least one further pigment different from the at least one organic black pigment present therein, preferably excluding inorganic black pigments such as carbon black. Said at least one further pigment can be different from the specific inventively used at least one non-black coloring pigment present in the second basecoat composition or in the non-aqueous topcoat composition, but does not necessarily has to. Examples of such further pigments are coloring pigment including white pigments and effect pigments.

Preferably, the amount in wt.-% of the at least one organic black pigment present in the basecoat composition used in step (1) of the inventive method is higher than the amount of any other further pigment contained therein in wt.-%, in each case based on the total solid content of the first basecoat composition.

Preferably, the total amount of pigments present in the first basecoat composition is in at most 40 wt.-%, more preferably at most 35 wt.-%, based on the total solid content of the first basecoat composition.

Preferably, the at least one organic black pigment present in the first basecoat composition is contained therein in an amount in the range of from 5 to 30 wt.-%, more preferably of from 6.0 to 25.0 wt.-%, even more preferably of from 7.5 to 20 wt.-%, in particular of from 8.0 to 16 wt.-%, in each case based on the total solid content of the first basecoat composition.

Preferably, the total solid content of the first basecoat composition is in the range of from 10 to 65 wt.-%, more preferably of from 15 to 60 wt.-%, even more preferably of from 20 to 50 wt.-%, in particular of from 25 to 45 wt.-%, in each case based on the total weight of the first basecoat composition.

The first basecoat composition preferably comprises - besides the at least one organic black pigment - at least one binder, more preferably at least one polymer (a1) as binder.

For the purposes of the present invention, the term "binder" is understood in accordance with DIN EN ISO 4618 (German version, date: March 2007) to be the non-volatile constituent of a coating composition, which is responsible for the film formation. The term includes crosslinkers and additives if these represent non-volatile constituents. Pigments and/or fillers contained therein are thus not subsumed under the term "binder". Preferably, the at least one polymer (a1) is the main binder of the coating composition. As the main binder in the present invention, a binder component is preferably referred to, when there is no other binder component in the coating composition, which is present in a higher proportion based on the total weight of the coating composition.

The term "polymer" is known to the person skilled in the art and, for the purposes of the present invention, encompasses polyadducts and polymerizates as well as polycondensates. The term "polymer" includes both homopolymers and copolymers.

The at least one polymer used as constituent (a1) may be self-crosslinking or non-self-crosslinking. Suitable polymers which can be used are, for example, known from EP 0 228 003 A1, DE 44 38 504 A1, EP 0 593 454 B1, DE 199 48 004 A1, EP 0 787 159 B1, DE 40 09 858 A1, DE 44 37 535 A1, WO 92/15405 A1 and WO 2005/021168 A1.

The at least one polymer used as constituent (a1) is preferably selected from the group consisting of polyurethanes, polyureas, polyesters, polyamides, polyethers, poly(meth)acrylates and/or copolymers of the structural units of said polymers, in particular polyurethane-poly(meth)acrylates and/or polyurethane polyureas. The at least one polymer used as constituent (a1) is particularly preferably selected from the group consisting of polyurethanes, polyesters, poly(meth)acrylates and/or copolymers of the structural units of said polymers. The term "(meth) acryl" or "(meth) acrylate" in the context of the present invention in each case comprises the meanings "methacrylic" and/or "acrylic" or "methacrylate" and/or "acrylate".

Preferred polyurethanes are described, for example, in German patent application DE 199 48 004 A1, page 4, line 19 to page 11, line 29 (polyurethane prepolymer B1), in European patent application EP 0 228 003 A1, page 3, line 24 to page 5, Line 40, European Patent Application EP 0 634 431 A1, page 3, line 38 to page 8, line 9, and international patent application WO 92/15405, page 2, line 35 to page 10, line 32.

Preferred polyesters are described, for example, in DE 4009858 A1 in column 6, line 53 to column 7, line 61 and column 10, line 24 to column 13, line 3 or WO 2014/033135 A2, page 2, line 24 to page 7, line 10 and page 28, line 13 to page 29, line 13 described. Likewise preferred polyesters are polyesters having a dendritic structure or star-shaped structure, as described, for example, in WO 2008/148555 A1. These can be used not only in clearcoats, but also in particular aqueous basecoats.

Preferred polyurethane-poly(meth)acrylate copolymers (e.g., (meth)acrylated polyurethanes)) and their preparation are described, for example, in WO 91/15528 A1, page 3, line 21 to page 20, line 33 and in DE 4437535 A1, page 2, line 27 to page 6, line 22 described.

Preferred poly(meth) acrylates are those which can be prepared by multistage free-radical emulsion polymerization of olefinically unsaturated monomers in water and/or organic solvents. For example, seed-core-shell polymers (SCS polymers) are particularly preferred. Such polymers or aqueous dispersions containing such polymers are known, for example, from WO 2016/116299 A1. Particularly preferred seed-core-shell polymers are polymers, preferably those having an average particle size of 100 to 500 nm, which can be prepared by successive free-radical emulsion polymerization of three preferably different monomer mixtures (A1), (B1) and (C1) of olefinic unsaturated monomers in water, wherein the mixture (A1) contains at least 50 wt .-% of monomers having a solubility in water of less than 0.5 g / l at 25 ° C and a polymer which is prepared from the mixture (A1), has a glass transition temperature of 10 to 65 ° C, the mixture (B1) contains at least one polyunsaturated monomer, and a polymer prepared from the mixture (B1) has a glass transition temperature of -35 to 15 ° C, and a polymer which is prepared from the mixture (C1) has a glass transition temperature of -50 to 15 ° C, and wherein i. first the mixture (A1) is polymerized, ii. then the mixture (B1) in the presence of the polymer formed under i. is polymerized, and iii. then the mixture (C1) in the presence of the poylmer formed under ii. is polymerized. All three mixtures are preferably different from one another.

Preferred polyurethane-polyurea copolymers are polyurethane-polyurea particles, preferably those having a Z-average particle size of 40 to 2000 nm, the polyurethane-polyurea particles, each in reacted form, containing at least one isocyanate group-containing polyurethane prepolymer containing anionic and/or groups which can be converted into anionic groups and at least one polyamine containing two primary amino groups and one or two secondary amino groups. Preferably, such copolymers are used in the form of an aqueous dispersion. Such polymers can in principle be prepared by conventional polyaddition of, for example, polyisocyanates with polyols and polyamines.

The polymer used as constituent (a1) preferably has reactive functional groups which enable a crosslinking reaction. Any common crosslinkable reactive functional group known to those skilled in the art can be present. Preferably, the polymer used as constituent (a1) has at least one kind of functional reactive groups selected from the group consisting of primary amino groups, secondary amino groups, hydroxyl groups, thiol groups, carboxyl groups and carbamate groups. Preferably, the polymer used as constituent (a1) has functional hydroxyl groups.

Preferably, the polymer used as constituent (a1) is hydroxy-functional and more preferably has an OH number in the range of 15 to 400 mg KOH / g, more preferably from 20 to 250 mg KOH/g.

The polymer used as constituent (a1) is particularly preferably a hydroxy-functional polyurethane-poly (meth) acrylate copolymer, a hydroxy-functional polyester and/or a hydroxy-functional polyurethane-polyurea copolymer.

In addition, the first basecoat composition may contain at least one typical crosslinking agent known per se. Crosslinking agents are to be included among the film-forming non-volatile components of a coating composition, and therefore fall within the general definition of the "binder". Crosslinking agents are thus to be subsumed under the constituent (a1).

If a crosslinking agent is present, it is preferably at least one aminoplast resin and/or at least one blocked or free polyisocyanate, preferably an aminoplast resin. Among the aminoplast resins, melamine resins such as melamine-formaldehyde resins are particularly preferred.

### Optional step (2) and second basecoat composition

According to optional step (2) a second pigmented basecoat composition different from the first basecoat composition is applied to the first coating film present on the substrate obtained after step (1) and a second coating film adjacent to the first coating film is formed. The second pigmented basecoat composition does not comprise any black pigments. The basecoat composition used in optional step (2) of the inventive method is hereinafter also referred to as "second basecoat composition". The basecoat composition used in optional step (2) can be solventborne (non-aqueous) or aqueous.

If optional step (2) - and, of course, also prior step (1) and following step (3b) are performed - the second basecoat composition comprises at least one non-black coloring pigment having a volume average particle size of <1000 nm in an amount in the range of from 0.01 to 7.50 wt.-%, based on the total solid content of the second basecoat composition, wherein said at least one non-black coloring pigment is incorporated into the second basecoat composition in the form of a pigment paste.

An aqueous or non-aqueous pigment paste comprising the at least one non-black coloring pigment can be used for preparing the second basecoat composition, depending on whether the basecoat composition used in step (1) is solventborne (non-aqueous) or aqueous.

Preferably, optional step (2) is performed prior to curing the first coating film obtained after step (1).

Preferably, the inventive method further comprises a step (2a), which is carried out after optional step (2) and before step (3b). In said step (2a) the second coating film obtained after step (2) is flashed-off before applying the clearcoat composition in step (3b), preferably for a period of 1 to 20 minutes, more preferably for a period of 2 to 15 minutes, in particular for a period of 5 to 10 minutes. Preferably, step (2a) is performed at a temperature not exceeding 40°C, more preferably at a temperature in the range of from 18 to 30°C.

Preferably, the at least one non-black coloring pigment is the only pigment in the basecoat composition used in step (2) of the inventive method. However, the basecoat composition used in step (2) may alternatively comprise at least one further pigment different from the at least one non-black coloring pigment present therein. Examples of such further pigments are other coloring pigment including white pigments and effect pigments.

Preferably, the amount in wt.-% of the at least one non-black coloring pigment present in the basecoat composition used in step (2) of the inventive method is higher than the amount of any other further pigment contained therein in wt.-%, in each case based on the total solid content of the second basecoat composition.

Preferably, the total amount of pigments present in the second basecoat composition is in at most 20 wt.-%, more preferably at most 10 wt.-%, based on the total solid content of the first basecoat composition.

Preferably, the at least one non-black coloring pigment present in the second basecoat composition is contained therein in an amount in the range of from 0.01 to 5.00 wt.-%, more preferably in an amount in the range of from 0.10 to 5.00 wt.-%, even more preferably of from 0.10 to 3.50 wt.-%, in particular of from 0.10 to 2.50 wt.-%, most preferred of from 0.20 to 2.00 wt.-%, in each case based on the total solid content of the second basecoat composition.

Preferably, the total solid content of the second basecoat composition is in the range of from 10 to 65 wt.-%, more preferably of from 15 to 60 wt.-%, even more preferably of from 20 to 50 wt.-%, in particular of from 25 to 45 wt.-%, in each case based on the total weight of the second basecoat composition.

The second basecoat composition preferably comprises - besides the at least one non-black coloring pigment - at least one binder, more preferably at least one polymer (b1) as binder. The same binders including crosslinkers described above in connection with constituent (a1) can also be used as constituent (b1).

### Step (3a) and pigmented topcoat composition

According to optional step (3a) a topcoat coating composition is applied to the first coating film present on the substrate obtained after step (1) and a second coating film adjacent to the first coating film is formed in case optional step (2) is not performed, wherein the topcoat coating composition is a pigmented topcoat composition, and wherein the second coating film obtained after step (3a) is the outermost film of the formed multilayer coating system. The topcoat coating composition does not comprise any black pigments. The topcoat composition used in step (3a) can be solventborne (non-aqueous) or aqueous, preferably is solventborne.

In case step (3a) is performed, no step (2) is carried out. In this case the pigmented topcoat composition comprises at least one non-black coloring pigment having a volume average particle size of <1000 nm in an amount in the range of from 0.01 to 7.50 wt.-%, based on the total solid content of the topcoat coating composition, wherein said at least one non-black coloring pigment is incorporated into the topcoat coating composition in the form of a pigment paste.

A non-aqueous pigment paste comprising the at least one non-black coloring pigment is preferably used for preparing the topcoat composition, if the topcoat composition is solventborne. Likewise, an aqueous pigment paste comprising at least one non-black coloring pigment is preferably used for preparing the topcoat composition, if the topcoat composition is aqueous.

Preferably, step (3a) is performed prior to curing the first coating film obtained after step (1).

Preferably, the at least one non-black coloring pigment is the only pigment in the topcoat composition used in step (3a) of the inventive method. However, the topcoat composition used in step (3a) may alternatively comprise at least one further pigment different from the at least one non-black coloring pigment present therein. Examples of such further pigments are other coloring pigment including white pigments and/or effect pigments. Preferably, however, no effect pigments are present.

Preferably, the amount in wt.-% of the at least one non-black coloring pigment present in the topcoat composition used in step (3a) of the inventive method is higher than the amount of any other further pigment contained therein in wt.-%, in each case based on the total solid content of the topcoat composition.

Preferably, the total amount of pigments present in the topcoat composition is at most 30 wt.-%, more preferably at most 20 wt.-%, based on the total solid content of the topcoat composition.

Preferably, the at least one non-black coloring pigment present in the topcoat composition is contained therein in an amount in the range of from 0.01 to 5.00 wt.-%, more preferably in an amount in the range of from 0.01 to 3.50 wt.-%, even more preferably of from 0.01 to 2.50 wt.-%, in particular of from 0.02 to 1.50 wt.-%, most preferred of from 0.03 to 1.00 wt.-%, in each case based on the total solid content of the topcoat composition.

Preferably, the total solid content of the topcoat composition is in the range of from 10 to 65 wt.-%, more preferably of from 15 to 60 wt.-%, even more preferably of from 20 to 50 wt.-%, in particular of from 25 to 45 wt.-%, in each case based on the total weight of the topcoat composition.

The topcoat composition preferably comprises - besides the at least one non-black coloring pigment - at least one binder, more preferably at least one polymer (c1) as binder. The same binders including crosslinkers described above in connection with constituents (a1) and (b1) can also be used as constituent (c1).

### Step (3b) and clearcoat composition

According to optional step (3b) a further coating composition is applied to the second coating film present on the substrate obtained after step (2) and a third coating film adjacent to the second coating film is formed in case optional step (2) is performed, wherein the coating composition is a clearcoat composition, and wherein the third coating film obtained after step (3b) is the outermost film of the formed multilayer coating system. The clearcoat coating composition does not comprise any black pigments. The clearcoat composition used in step (3b) can be solventborne (non-aqueous) or aqueous, with solventborne being preferred.

The clearcoat composition may be non-pigmented, i.e. may not only not contain any black pigments, but no pigments at all. The clearcoat composition, however, may alternatively contain coloring and/or effect pigments - in the case of coloring pigments pigments, other than black pigments -, preferably coloring pigments, in such amounts that do not interfere with the desired transparency of the clearcoat once cured. For examples, the clearcoat composition may contain up to 7.5 wt.-%, preferably up to 5.0 wt.-%, more preferably up to 2.5 wt.-%, still more preferably up to 1.5 wt.-% of at least one coloring pigment, in each case based on the total solid content of the clearcoat composition.

Preferably, step (3b) is performed prior to curing the second coating film obtained after step (2).

Preferably, the total solid content of the clearcoat composition is in the range of from 10 to 65 wt.-%, more preferably of from 15 to 60 wt.-%, even more preferably of from 20 to 50 wt.-%, in particular of from 25 to 45 wt.-%, in each case based on the total weight of the clearcoat composition.

The clearcoat composition preferably comprises at least one binder, more preferably at least one polymer (c1) as binder. The same binders including crosslinkers described above in connection with constituents (a1) and (b1) can also be used as constituent (c1).

### Clearcoat or topcoat composition applied in step (3a) or (3b)

The clearcoat or topcoat coating composition may comprise at least one binder, more preferably at least one polymer (c1) as binder. As the clearcoat or topcoat coating composition preferably is a 2K-composition it preferably comprises at least one polymer (c1) having average two or more OH-groups and/or amino groups and/or carbamate groups, more preferably OH-groups and as at least one further polymer at least one polyisocyanate having free NCO-groups as crosslinker.

Preferably, the at least one preferably OH-functional polymer (c1) has a weight average molecular weight M_{w}, measured by means of gel permeation chromatography (GPC) against a polystyrene standard, preferably between 800 and 100000 g/mol, more particularly between 1000 and 75 000 g/mol.

Particularly preferred constituents (c1) are selected from the group consisting of polyesters, polyurethanes, poly(meth)acrylates and mixtures thereof. As outlined above these terms include both homopolymers and copolymers in each case.

Suitable polyesters are described for example in EP-A-0 994 117 and EP-A-1 273 640. Polyurethane polyols are prepared preferably by reaction of polyester polyol prepolymers with suitable di- and/or polyisocyanates and are described for example in EP-A-1 273 640. Preferably, the at least one OH-functional polymer (c1) is at least one OH-functional (meth)acrylic copolymer and/or at least one OH-functional polyester, preferably at least one OH-functional (meth)acrylic copolymer.

Preferably, the at least one OH-functional polymer (c1) has an OH number of 30 to 400 mg KOH/g, more particularly between 100 and 300 KOH/g. The glass transition temperature, measured by means of DSC measurements in accordance with DIN EN ISO 11357-2 (2019-03), of this polymer is preferably between -150 and 100°C, more preferably between -120°C and 80°C.

Suitable crosslinkers are organic constituents bearing on average two or more NCO-groups. The at least one organic constituent used as crosslinker preferably has a cycloaliphatic structure and/or a parent structure that is derived from a cycloaliphatic polyisocyanate by trimerization, dimerization, urethane formation, biuret formation, uretdione formation and/or allophanate formation. Alternatively or additionally, the at least one organic constituent used as crosslinker preferably has an acyclic aliphatic structure and/or a parent structure that is derived from an acyclic aliphatic polyisocyanate by trimerization, dimerization, urethane formation, biuret formation, uretdione formation and/or allophanate formation. The acyclic aliphatic polyisocyanates - optionally serving as parent structures - are preferably substituted or unsubstituted aliphatic polyisocyanates that are known per se. Examples are tetramethylene 1,4-diisocyanate, hexamethylene 1,6-diisocyanate, 2,2,4-trimethylhexane 1,6-diisocyanate, ethylene diisocyanate, dodecane 1,12-diisocyanate, and mixtures of the aforementioned polyisocyanates. The cycloaliphatic polyisocyanates - optionally serving as parent structures - are preferably substituted or unsubstituted cycloaliphatic polyisocyanates which are known per se. Examples of preferred polyisocyanates are isophorone diisocyanate, cyclobutane 1,3-diisocyanate, cyclohexane 1,3-diisocyanate, cyclohexane 1,4-diisocyanate, methylcyclohexyl diisocyanates, hexahydrotoluene 2,4-diisocyanate, hexahydrotoluene 2,6-diisocyanate, hexahydrophenylene 1,3-diisocyanate, hexahydrophenylene 1,4-diisocyanate, perhydrodiphenylmethane 2,4'-diisocyanate, 4,4'-methylendicyclohexyl diisocyanate (e.g. Desmodur ^{®} Wfrom Bayer AG) and mixtures of the aforementioned polyisocyanates.

### Non-black coloring pigment present in second basecoat or topcoat composition and pigment pastes comprising said pigment

In the following the inventively used non-black coloring organic pigment is further described.

Preferably, the at least one non-black coloring pigment present in either the second basecoat composition or in the topcoat composition is a blue and/or green and/or violet and/or red pigment, more preferably a blue and/or green and/or violet pigment, still more preferably a blue and/or green pigment, in particular a blue pigment. Preferably, it is the only coloring pigment present in the second basecoat or in the topcoat composition, even more preferably the only pigment present in the second basecoat or in the topcoat composition at all.

The at least one non-black coloring pigment present in either the second basecoat composition or in the topcoat composition may be an inorganic or organic pigment such as an inorganic or organic blue pigment. Suitable inorganic blue pigments are commercially available, such as Heucodur^{®} Blue 550. Preferably, however, it is an organic pigment, in particular an organic blue pigment. Preferably, the at least one inventively used non-black pigment is a phthalocyanine pigment. Most preferred are blue pigments nos. 15:1, 15:2, 15:3, 15:4, and 15:6, in particular 15:1 (P.B. 15:1, P.B. P.B. 15:2, P.B. 15:3, P.B. 15:4, and P.B. 15:6). Suitable organic blue pigments are also commercially available. Examples are Palomar^{®} Blue 15:1-248-4806 and Palomar@ Blue 15:1-248-4816.

Preferably, the at least one non-black coloring organic pigment present in either the second basecoat composition or in the topcoat composition has a volume average particle size in the range of from 10 nm to <950 nm, preferably of from 25 nm to 900 nm, more preferably of from 30 nm to 850 nm, in particular of from 40 nm to <800 nm.

Preferably, the at least one non-black coloring organic pigment present in either the second basecoat composition or in the topcoat composition has a Z-average particle size in the range of from 10 nm to 750 nm, preferably of from 25 nm to 500 nm, more preferably of from 30 nm to 350 nm, in particular of from 40 nm to 300 nm.

Preferably, the at least one non-black coloring organic pigment present in either the second basecoat composition or in the topcoat composition has a number-based median primary particle size (d_{N,50%}) in the range of from 10 nm to 700 nm, preferably of from 25 nm to 500 nm, more preferably of from 30 nm to 400 nm, in particular of from 50 nm to 350 nm. The term number-based median particle size (d_{N,50%}) is a parameter known to a person skilled in the art. The characteristic variable labeled with the lower-case letter "d" is the percentile (50%) of the cumulative distribution curve with the 50% percentile corresponding to the median. The index "N" pertains to the number-based distribution.

Volume average particle size, Z-average particle size and number-based median primary particle size are determined by DLS according to the method described in the 'Methods' section hereinafter.

A pigment paste comprising the at least one non-black coloring pigment is used for preparing the second basecoat or topcoat composition. The pigment pastes used for each of these two compositions can be different from one another when the second basecoat composition is aqueous and the topcoat coating composition is non-aqueous. They may also be identical when both of these compositions are non-aqueous. The pigment pastes in each case preferably contain at least one dispersant and/or grinding resin for dispersing/grinding the pigment. The inventively used at least one non-black coloring pigment present within the pigment paste is preferably milled with a mill in order to reduce its volume average particle size to <1000 nm. Milling is preferably also performed for achieving the above mentioned preferred ranges of Z-average particle size and number-based median primary particle size. Milling is preferably also performed for achieving the below mentioned haze values. Milling is preferably performed by making use of milling beads having a diameter of 0.5 mm or below such as 0.4 and/or 0.3 mm. The same milling conditions may also be used in case of a pigment paste of the at least one black pigment present in the first basecoat composition is prepared, when it is desired to reduce at least one of the volume average particle size, Z-average particle size and number-based median primary particle size as well as haze of said black pigment as well before incorporating it into the first basecoat composition. Particularly suitable milling conditions are evident from the examples.

Preferably, the pigment paste containing the at least one non-black coloring pigment, which is used for preparing the second basecoat composition or for the topcoat composition has a haze of <20%, preferably of <15%, more preferably of <10%, in particular of <7.5%, most preferred of ≤5%. The term "haze" is known to a person skilled in the art. Haze is a measurement of the transparency as defined in ASTM D 1003. The method for measuring the haze of the inventively used (and comparatively used) pigment pastes is described in the 'Methods' section hereinafter.

### Optional step (4)

As outlined hereinbefore, preferably optional step (2) is performed prior to curing the first coating film obtained after step (1), step (3a) is performed prior to curing the first coating film obtained after step (1) and step (3b) is performed prior to curing the second coating film obtained after step (2).

Preferably, the inventive method further comprises a step (3c), which is carried out after step (3a) or (3b) and before step (4). In said step (3c) the third coating film obtained after step (3a) or (3b) is flashed-off before performing an optional curing step (4), preferably for a period of 1 to 20 minutes, more preferably for a period of 2 to 15 minutes, in particular for a period of 5 to 10 minutes. Preferably, step (3c) is performed at a temperature not exceeding 40°C, more preferably at a temperature in the range of from 18 to 30°C.

The inventive method may optionally comprise and preferably comprises an additional step (4), namely

(4) jointly curing, i.e. curing simultaneously, all coating films applied in steps (1) and (3a) or steps (1), (2) and (3b) to obtain a cured multilayer coating system comprising at least a first and second coating layer, the second coating layer being the outermost layer of the formed multilayer coating system or comprising at least a first, a second and a third coating layer, the third coating layer being the outermost layer of the formed multilayer coating system.

Each resulting cured coating film represents a coating layer.

Preferably, step (4) is performed at a temperature less than 150°C, preferably less than 130°C, in particular at a temperature in the range of from 15 to 110°C or of from 15 to 90°C, for a period of 5 to 45 minutes, preferably for a period of 20 to 45 minutes, in particular for a period of 25 to 35 minutes.

### Inventive multilayer coating system

A further subject-matter of the present invention is a multilayer coating system present on an optionally pre-coated substrate, which is obtainable by the inventive method.

All preferred embodiments described hereinabove in connection with the inventive method are also preferred embodiments with regard to the aforementioned inventive coated substrate.

Preferably, the inventive multilayer coating system - obtainable by the inventive method has - after curing - a jetness (Mc) of at least 250, preferably of at least 270, and/or has a jetness (Mc) value, which exceeds its blackness (My) value, preferably by at least 1%. The method for measuring the blackness and the jetness is described in the 'Methods' section hereinafter.

The terms "blackness" (My) and "jetness" (Mc) are known to a person skilled in the art and are parameters by which the color quality of "black" can be quantified. Blackness (My) is a measure of the degree of blackness, directly related to the reflectance and is e.g. defined in DIN 55979 (04-1989). Blackness (My) can be quantified by using the general formula My = 100*log (Yn/Y). Jetness (Mc) is a color dependent black value developed by K. Lippok-Lohmer (K. Lippok-Lohmer, Farbe und Lack, 92, p. 1024 (1986) and is also referred to in DIN 53235-1 (06-2005) and DIN 53235-2 (06-2005). Jetness (Mc) can be quantified by using the general formula Mc = 100*[log(Xn/X) - log(Zn/Z) + log(Yn/Y)]. X, Y, Z are the CIE tristimulus values for the sample being measured. Xn, Yn, Zn are the tristimulus values for the light source. The difference between Mc and My, i.e. Mc - My, is the undertone (dM). If dM <0 the undertone is brown/reddish (My > Mc). If dM is >0, then the black exhibits a bluish undertone (My < Mc).

### Inventive coated substrate

A further subject-matter of the present invention is a coated substrate, which is obtainable by the inventive method.

All preferred embodiments described hereinabove in connection with the inventive method and the inventive multilayer coating system are also preferred embodiments with regard to the aforementioned inventive coated substrate.

### Inventive use

A further subject-matter of the present invention is a use of a pigmented coating composition,
which does not comprise any black pigments, comprises at least one non-black coloring pigment having a volume average particle size of <1000 nm in an amount in the range of from 0.01 to 7.50 wt.-%, based on the total solid content of the coating composition, wherein said at least one non-black coloring pigment is incorporated into the coating composition in the form of a pigment paste,
in either step (2) as second basecoat composition or in step (3a) as topcoat composition of the inventive method of preparing a multilayer coating system onto an optionally pre-coated substrate
for increasing the jetness (Mc) of the multilayer coating system obtained after curing to such an extent that the jetness (Mc) exceeds the blackness (My) of the cured multilayer coating system, preferably by at least 1%.

All preferred embodiments described hereinabove in connection with the inventive method, inventive multilayer coating system, and inventive coated substrate are also preferred embodiments with regard to the aforementioned inventive use.

### METHODS

### 1. Determining the non-volatile fraction

The amount of solid content (non-volatile matter, solid fraction) including the total solid content is determined via DIN EN ISO 3251:2019-09 at 110°C for 60 min.

### 2. Haze measurements

The pigment paste to be subjected to haze measurements is either diluted with deionized water (in case of aqueous pigment pastes) or with n-butyl acetate (in case of solventborne pigment pastes) to provide suitable diluted samples which are then used for the measurement. The measurements are performed within 24 hours of milling the pigment pastes. As device for measuring the haze a Haze-gard I instrument, which is available from Byk-Gardner, has been used. The instrument is calibrated using deionized water or n-butyl acetate as the reference standard in a solution based quartz cuvette flow sample holder. A 500 micron path-length cell is used for the measurements. Measurements are performed at a transmission of 17.5 % ±1.0 % at the wavelength of maximum absorbance. If the transmittance of a sample prepared after dilution is found to be too low the sample is further diluted until it reaches a transmission of 17.5 % ±1.0 %.

### 3. Particle size characteristics

Different parameters of the particle size are measured. All parameters are measured by DLS particle size measurements (dynamic light scattering measurements). The DLS measurements are performed within 24 hours of milling the pigment pastes. Z-average particle size, volume average particle size (V-average) as well as d_{N,50%}, d_{N,10%} and d_{N,90%} parameters are measured by DLS. The d_{N,50%}, d_{N,10%} and d_{N,90%} parameters are determined using an intensity weighting. Each parameter for each paste is determined over four trials and the values given represent the average over these four trials. The pigment paste to be subjected to particle size analysis is either diluted with deionized water (in case of aqueous pigment pastes) or with n-butyl acetate (in case of solventborne pigment pastes) to provide suitable diluted samples which are then subjected to the analysis. In case of aqueous pigment pastes each paste is diluted into deionized water at a first dilution of 1:100 and then that solution is diluted further to 1:50. The total dilution is thus 1:5000 (of the original paste in each case). In case of solventborne pigment pastes each paste is diluted into n-butyl acetate at a first dilution of 1:100 and then that solution is diluted further to 1:50. The total dilution is thus 1:5000 (of the original paste in each case). Each sample is transferred into a glass cuvette as cell (glass cuvette PCS1115). The sample is then put into a DLS measurement system. A Malvern Zetasizer Nano series has been used as DLS particle size analyzer, which is available from the company Malvern (the model ZEN1690 has been used). Each sample is allowed to equilibrate in the chamber for 2 minutes before starting to run the particle size analysis. Data is then collected.

### 4. Measurement of color values (L*, a*, b*)

The L*a*b* color space or the L*a*b* color model (i.e. the CIELAB color model) is known to a person skilled in the art. The L*a*b* color model is standardized e.g., in DIN EN ISO/CIE 11664-4:2020-03. Each perceivable color in the L*a*b*-color space is described by a specific color location with the coordinates {L*,a*,b*} in a three-dimensional coordinate system. The a*-axis describes the green or red portion of a color, with negative values representing green and positive values representing red. The b*-axis describes the blue or yellow portion of a color, with negative values for blue and positive values for yellow. Lower numbers thus indicate a more bluish color. The L*-axis is perpendicular to this plane and represents the brightness (lightness). The L*-axis has the end points black (L = 0) and white (L = 100). Lower values thus indicate a darker color. The color values L*, a* and b* of a coated substrate (after curing) are determined in accordance with ASTM E 284-81a after its preparation including curing. The values are measured by making use of the instrument BYK-mac i (BYK-Gardner). Analysis of the cured samples is done in accordance with color, sparkle and graininess measurement with the BYK-mac i spectrophotometer standard operating procedure. The samples to be analyzed that are completely cured are wiped down with a microfiber cloth. The BYK-mac i instrument is then placed onto the substrate surface and performs a measurement using D65 light source at -15°, 15°, 25°, 45°, 75° and 110° angles with data recorded for each angle using CIELab settings. This measurement is taken on an individual panel in at least three different positions and values are averaged over the trials and reported. The color values L*, a* and b* reported hereinafter in the experimental part relate to the 110° angle.

### 5. Measurement of jetness (Mc) and blackness (My)

Jetness and blackness of a coated substrate are determined after its preparation including curing. Blackness (My) is a measure of the degree of blackness, directly related to the reflectance and is e.g. defined in DIN 55979 (04-1989). Blackness (My) of a sample can be quantified by obtaining color data by making use of suitable spectrophotometer by using the general formula My = 100*log (Yn/Y). Jetness (Mc) is a color dependent black value developed by K. Lippok-Lohmer (K. Lippok-Lohmer, Farbe und Lack, 92, p. 1024 (1986) and is also referred to in DIN 53235-1 (06-2005) and DIN 53235-2 (06-2005). Jetness (Mc) can be quantified by obtaining color data by making use of a suitable spectrophotometer by using the general formula Mc = 100*[log(Xn/X) - log(Zn/Z) + log(Yn/Y)]. X, Y, Z are the CIE tristimulus values for the sample being measured. Xn, Yn, Zn are the tristimulus values for the light source. For the measurement the light source is the D65 light source (simulated daylight CIE standard). The standard 2° standard observer is normalized for the relative luminency, where Yn=100 yields Xn= 95.047 and Zn=108.883. They also report a supplementary 10° observer with Xn= 94.8110 and Zn= 107.304. The values are measured by making use of the instrument BYK-mac i (BYK-Gardner). Analysis of the cured samples is done in accordance with color, cparkle and graininess measurement with the BYK-mac i spectrophotometer standard operating procedure. The samples to be analyzed that are completely cured are wiped down with a microfiber cloth. The BYK-mac i instrument is then placed onto the substrate surface and performs a measurement using D65 light source at -15°, 15°, 25°, 45°, 75° and 110° angles with data recorded for each angle using CIELab settings. The My- and Mc-values reported hereinafter in the experimental part relate to measurements at an angle of 75°. The difference between Mc and My, i.e. Mc - My, is the undertone (dM). If dM <0 the undertone is brown/reddish (My > Mc). If dM is >0, then the black exhibits a differently colored undertone (My < Mc), the undertone color depending on the non-black coloring pigment(s) used. A neutral to blue and/or green undertone, particularly a blue undertone, is in particular desired.

### EXAMPLES

The following examples further illustrate the invention but are not to be construed as limiting its scope. 'Pbw' means parts by weight. If not defined otherwise, 'parts' means 'parts by weight'.

### 1. Preparation of pigment pastes

### 1.1 Preparation of aqueous pigment pastes P1 to P7 and P2a

The pigment pastes indicated in Table 1 were prepared from the constituents and their amounts as listed in Table 1 by the following methods:

### Pigment paste P1

The black pigment paste P1 was produced by adding Paliogen^{®} Black L0086 to a stirring mixture of dispersant 1, propylene glycol n-butyl ether and deionized water. The resulting suspension is agitated using a Cowles blade for 5 minutes. The pH is adjusted to 8.1 using a 20 wt.-% dimethyl ethanol amine aqueous solution (measured with Starter 300 pH Portable pH meter (Ohaus Corporation, Parsippany, New Jersey, USA)). The suspension is then transferred to a mixing jar and 0.9-1.1 mm YTZ milling media (Fox Industries) are added (2:1 weight ratio media- suspension). The suspension is then agitated using a LAU shaker (LAU disperser DAS 200 - LAU GmbH) for 4 hours. The 0.9 - 1.1 mm YTZ media is separated using gravity filtration. The as collected paste is transferred into another mixing jar and infused with 0.3 - 0.4 mm YTZ milling media in a 2:1 beads to paste weight ratio and agitated using a LAU shaker (LAU disperser DAS 200 - LAU GmbH) for 9 hours. The resulting final paste product is filtered to remove the 0.3 - 0.4 mm media and used with no further modifications as pigment paste P1.

### Pigment paste P2a

The blue pigment paste P2a was produced by adding Palomar@ Blue 15:1 - 248-4816 (Sun Chemical) to a stirring mixture of dispersant 1, propylene glycol n-butyl ether and deionized water. The resulting suspension is agitated using a Cowles blade for 5 minutes. The pH is adjusted to 8.1 using a 20 wt.-% dimethyl ethanol amine aqueous solution (measured with Starter 300 pH Portable pH meter (Ohaus Corporation, Parsippany, New Jersey, USA)). The suspension is then transferred to a mixing jar and a 2:1-weight ratio (media:suspension) of 0.3 - 0.4 mm YTZ milling media (Fox Industries) are added. The suspension is agitated using a LAU shaker (LAU disperser DAS 200 - LAU GmbH) for 10 hours. The resulting paste is separated by gravity filtration from the 0.3 - 0.4 mm YTZ media and used with no further modifications as pigment paste P2a.

### Pigment paste P2b

The blue pigment paste P2b was produced by further modification of pigment paste P2a. 5.7 parts of dispersant 2 is diluted with 14.3 parts of deionized water under agitation. This resin solution is then added slowly to 80 parts of pigment paste P2a under agitation. The resulting paste is then used with no further modifications as pigment paste P2b.

### Pigment paste P3

The blue pigment paste P3 was produced by adding dispersant 3 into a large mixing vessel and diluting said dispersant with deionized water, followed by addition of blue pigment Palomar^{®} Blue 15:1 - 248-4806 (Sun Chemical) in small aliquots. This slurry was sheared until it was homogenous and then further diluted with deionized water. The suspension was then transferred into an Eiger bead mill (EMI) containing 0.9 - 1.1 YTZ beads (Fox industries) and processed to 275 Whr/kg. The resulting paste is then used with no further modifications as pigment paste P3 after removal of the beads.

### Pigment paste P4

The blue pigment paste P4 was produced by adding Palomar@ Blue 15:1 - 248-4806 (Sun Chemical) to a stirring mixture of dispersant 4, propylene glycol n-butyl ether and deionized water. The resulting suspension is agitated using a Cowles blade for 5 minutes. The pH is adjusted to 8.1 using a 20 wt.-% dimethyl ethanol amine aqueous solution (measured with Starter 300 pH Portable pH meter (Ohaus Corporation, Parsippany, New Jersey, USA)). The suspension is then transferred to a mixing jar and a 2:1-weight ratio (media:suspension) of 0.3 - 0.4 mm YTZ milling media (Fox Industries) are added. The suspension is agitated using a LAU shaker (LAU disperser DAS 200 - LAU GmbH) for 10 hours. The resulting paste is separated by gravity filtration from the 0.3 - 0.4 mm YTZ media. 5.7 parts of dispersant 2 is diluted with 14.3 parts of deionized water under agitation. This resin solution is then added slowly to 80 parts of the above identified resulting paste under agitation. The then resulting paste is used with no further modifications as pigment paste P4 after removal of the beads.

### Pigment paste P5

The blue pigment paste P5 was produced by adding dispersant 5 into a large mixing vessel and diluting said dispersant with deionized water, followed by addition of wetting additive, polypropylene glycol and emulsifier. Then blue pigment Heucodur^{®} Blue 550 (Heubach) was added in small aliquots. This slurry was sheared using a Cowles blade until homogenous. The resulting paste is then further diluted with deionized water, mixed well and then transferred into an Eiger Bead (EMI) mill for processing with 0.9 - 1.1 mm YTZ beads (Fox Industries) and milled to an energy of 300 Whr/kg in a 2:1-weight ratio (media:paste). The resulting paste is used with no further modifications as pigment paste P5 after removal of the beads.

### Pigment paste P6

The yellow pigment paste P6 was produced by adding dispersant 3, deionized water, propylene glycol n-propyl ether in a large mixing vessel, mixed well, and by adjusting the pH to 8.1 using a 20 wt.-% dimethyl ethanol amine aqueous solution (measured with Starter 300 pH Portable pH meter (Ohaus Corporation, Parsippany, New Jersey, USA)). To this solution Bayfast^{®} Yellow Y-5688 (Bayer) is added in small aliquots under agitation and mixed until homogenous. This solution is then diluted with deionized water and the pH is adjusted again to 8.1 using a 20 wt.-% dimethyl ethanol amine aqueous solution (measured with Starter 300 pH Portable pH meter (Ohaus Corporation, Parsippany, New Jersey, USA)). The pigment paste is transferred to an Eiger Bead mill (EMI) containing 0.9 - 1.0 mm YTZ beads (Fox Industries) in a 2:1-media to paste weight ratio and milled to an energy of 175 Whr/kg. The resulting paste is used with no further modifications as pigment paste P6 after removal of the beads.

### Pigment paste P7

The yellow pigment paste P7 was produced by adding dispersant 3, deionized water, propylene glycol n-propyl ether and fumed silica in a large mixing vessel and mixed well. To this solution Irgazin^{®} Yellow 3RLTN (BASF SE) is added in small aliquots under agitation and mixed until homogenous. The mixture is then diluted with deionized water and then is transferred to an Eiger Bead mill (EMI) containing 0.9 - 1.0 mm YTZ beads (Fox Industries) in a 2:1-media to paste weight ratio and milled to an energy of 190 Whr/kg. The resulting paste is used with no further modifications as pigment paste P7 after removal of the beads.

Dispersant 1 is composed of 42.5 wt.-% of (meth)acrylic resin solids, 31.3 wt.-% ethylene glycol monobutyl ether and 26.2 wt.-% deionized water.

Dispersant 2 is composed of 27.0 wt.-% of a urethane resin, 6.0 wt.-% of ethylene glycol monobutyl ether and 67.0 wt.-% of deionized water, adjusted with a small amount of dimethyl ethanol amine.

Dispersant 3 is composed of 35.5 wt.-% resin solids and 64.5 wt.-% solvents. The solvent content of the dispersant is as follows: 28.40 wt.-% propylene glycol n-propyl ether, 6.12 wt.-% methyl isoamyl ketone (MIAK), 28.45 wt.-% deionized water and 1.53 wt.-% mineral spirits. The resin present in the dispersant is prepared as disclosed in example 5 of US patent no. 5,270,399.

Dispersant 4 is composed of 61 wt.-% resin solids and 39 wt.-% solvents. The resin is a PEG-modified polyester based star polymer.

Dispersant 5 is composed of 45.3 wt.-% (meth)acrylic resin solids and 54.6 wt.-% deionized water, adjusted with a small amount of dimethyl ethanol amine.

The wetting additive is a commercially available wetting additive. The emulsifier is a commercially available emulsifier. The polypropylene glycol used is also commercially available.

**Table 1 - Pigment pastes P1, P2a, P2b and P3 to P7**

| *Constituents* | *P1* | *P2a* | *P2b* | *P3* | *P4* | *P5* | *P6* | *P7* |
|---|---|---|---|---|---|---|---|---|
| Black pigment 1 | 10.0 g | - | - | - | - | - | - | - |
| Blue Pigment 1 | - | 10.0 g | 8.0 g | - | - | - | - | - |
| Blue Pigment 2 | - | - | - | 25.65 g | 8.0 g | - | - | - |
| Blue Pigment 3 | - | - | - | - | - | 33.0 g | - | - |
| Yellow pigment 1 | - | - | - | - | - | - | 18.4 g | - |
| Yellow pigment 2 | - | - | - | - | - | - | - | 40.0 g |
| Fumed silica | - | - | - | - | - | - | - | 0.4 g |
| Dispersant 1 | 14.5 g | 14.5 g | 11.6 g | - | - | - | - | - |
| Dispersant 2 | - | - | 5.7 | - | 5.7 | - | - | - |
| Dispersant 3 | - | - | - | 24.8 g | - | - | 26.6 g | 7.6 g |
| Dispersant 4 | - | - | - | - | 9.8 g | - | - | - |
| Dispersant 5 | - | - | - | - | - | 47.0 g | - | - |
| Propylene glycol n-butyl ether | 1.75 g | 2.5 g | 2.0 g | - | 2.0 g | - | - | - |
| Propylene glycol n-propyl ether | - | - | - | - | - | - | 3.3 g | 7.3 g |
| Wetting additive | - | - | - | - | - | 4.0 g | - | - |
| Polypropylene glycol | - | - | - | - | - | 3.0 g | - | - |
| Emulsifier | - | - | - | - | - | 0.3 g | - | - |
| Deionized water | 73.8 g | 73.0 g | 73.0 g | 48.6 g | 80.0 g | 12.7 g | 51.7 g | 44.7 g |
| | | | | | | | | |
| Pigment amount, based on total solid content [wt.-%] | 62.5 | 62.5 | 55.8 | 75.0 | 51.3 | 53.6 | 74.0 | 92.8 |

As outlined hereinbefore the black pigment 1 present in pigment paste P1 is Paliogen^{®} Black L0086. Pigment pastes P2a and P2b each contain blue pigment 1, which is Palomar^{®} Blue 15:1 - 248-4816. Pigment pastes P3 and P4 each contain blue pigment 2, which is Palomar^{®} Blue 15:1 - 248-4806. Blue pigment 3, which is present in pigment paste P5, is Heucodur^{®} Blue 550. Yellow pigment 1 is Bayfast^{®} Yellow Y-5688. Yellow pigment 2 is Irgazin^{®} Yellow 3RLTN.

The pigment pastes P1, P2a, P2b and P3 to P7 have been analyzed via particle size analysis after their preparation including the milling step. Additionally, their haze has been measured. Both measuring of the haze and measurement of the particle size characteristics indicated in Table 2 have been performed according to the methods disclosed in the 'Methods' section. The measured values are indicated in Table 2. No values have been determined for pigment paste P2a.

**Table 2 - Haze and particle size characteristics of pigment pastes P1 to P7**

| | *P1* | *P2b* | *P3* | *P4* | *P5* | *P6* | *P7* |
|---|---|---|---|---|---|---|---|
| Haze | 5.0 | 7.5 | 31.8 | 3.7 | 98.3 | 95.0 | 98.6 |
| Volume average particle size (V-average) [nm] | 123.7 | 761.5 | 1245.0 | 117.5 | 1353.0 | 2368.0 | 340.6 |
| Z-average particle size [nm] | 131.9 | 262.5 | 229.6 | 133.1 | 390.3 | 413.7 | 274.9 |
| d_{N,10%} [nm] | 75.2 | 176 | 149 | 84.3 | 252 | 233 | 165 |
| d_{N,50%} [nm] | 163 | 288 | 248 | 149 | 424 | 398 | 310 |
| d_{N,90%} [nm] | 321 | 478 | 426 | 264 | 759 | 854 | 564 |

### 1.2 Preparation of solventborne pigment pastes P8 and P9

The pigment pastes indicated in Table 3 were prepared from the constituents and their amounts as listed in Table 3 by the following methods:

### Pigment paste P8

The blue pigment paste P8 was prepared by mixing Solsperse^{®} 76500 (Lubrizol) and Solsperse 5000S^{®} (Lubrizol) in n-butyl acetate, followed by slow addition of Palomar@ Blue 248-4816 (Sun Chemical) with thorough agitation until homogeneity was achieved. The resulting mixture was further diluted with n-butyl acetate and transferred to an Eiger Bead mill (EMI) containing 0.9 - 1.1 YTZ media (Fox Industries) and milled to 500 Whr/kg (2:1-media to mixture weight ratio). The resulting paste was isolated and transferred to perform a second milling step using and Eiger mill (EMI) containing 0.3 - 0.4 mm YTZ media (Fox Industries) and processed to 3000 Whr/kg (2:1-media to mixture weight ratio). After milling was completed, the resulting paste is further reduced by using n-butyl acetate and then used with no further modifications as pigment paste P8 after removal of the beads.

### Pigment paste P9

The blue pigment paste P9 was prepared by mixing Ekfa^{®} PX 4350 and Ekfa^{®} MI 6745 in n-butyl acetate, followed by slow addition of Heliogen^{®} Blue L6600F with thorough agitation until homogeneity was achieved. The resulting mixture was further diluted with n-butyl acetate and transferred to an Eiger Bead mill (EMI) containing 0.9 - 1.1 YTZ media (Fox Industries) and milled to 500 Whr/kg (2:1-media to mixture weight ratio). The resulting paste was isolated and transferred to perform a second milling step using and Eiger mill (EMI) containing 0.3 - 0.4 mm YTZ media (Fox Industries) and processed to 3500 Whr/kg (2:1-media to mixture weight ratio). After milling was completed, the resulting paste is further reduced by using n-butyl acetate and then used with no further modifications as pigment paste P9 after removal of the beads.

The formulations of pigment pastes P8 and P9 are indicated in Table 3.

**Table 3 - Pigment pastes P8 and P9**

| *Constituents* | *P8* | *P9* |
|---|---|---|
| Blue Pigment 1 | 7.0 g | - |
| Blue Pigment 4 | - | 7.0 g |
| Solsperse^{®} 76500 | 16.8 g | - |
| Solsperse^{®} 5000s | 1.4 g | - |
| Ekfa^{®} MI 6745 | - | 0.3 g |
| Ekfa^{®} PX 4350 | - | 11.0 g |
| n-butyl acetate | 74.8 g | 81.7 g |
| | | |
| Pigment amount, based on total solid content [wt.-%] | 41.7 | 50.7 |

Pigment paste P8 contains blue pigment 1, which is Palomar^{®} Blue 15:1 - 248-4816. Blue pigment 4 is Heliogen^{®} Blue L6600F (a blue 15:6 pigment; BASF SE). Solsperse^{®} 76500 is a commercially available dispersant (Lubrizol) and Solsperse^{®} 5000s is a commercially available dispersing additive (Lubrizol). Ekfa^{®} MI 6745 is a commercially available dispersing additive (BASF SE) and Ekfa^{®} PX 4350 is a commercially available dispersant (BASF SE).

The pigment pastes P8 and P9 have been analyzed via particle size analysis after their preparation including the milling step. Additionally, their haze has been measured. Both measuring of the haze and measurement of the particle size characteristics indicated in Table 4 have been performed according to the methods disclosed in the 'Methods' section. The measured values are indicated in Table 4.

**Table 4 - Haze and particle size characteristics of pigment pastes P8 and P9**

| | *P8* | *P9* |
|---|---|---|
| Haze | 0.8 | 0.7 |
| Volume average particle size [nm] | 108.9 | 54.6 |
| Z-average particle size [nm] | 54.2 | 63.8 |
| d_{N,10%} [nm] | 32.8 | 44.4 |
| d_{N,50%} [nm] | 67.0 | 76.4 |
| d_{N,90%} [nm] | 140.0 | 133.0 |

### 1.3 Preparation of additional aqueous pigment pastes P10 to P12

Three additional pigment pastes containing commercial black pigments have been prepared. P10 and P11 both contained a commercial organic azomethine black pigment, namely Chromofine^{®} A-1103 (Dainichiseika Chemicals). P12 contained a commercial inorganic black pigment, namely the carbon black pigment Monarch^{®} 1300 (Cabot).

The pigment pastes indicated in Table 4a were prepared from the constituents and their amounts as listed in Table 4a by the following methods:

### Pigment paste P10

The black pigment paste P10 was produced by adding Chromofine^{®} Azo Black A-1103 (Dainichiseika Chemicals) to a stirring mixture of dispersant 1, propylene glycol n-butyl ether and deionized water. The resulting suspension was agitated using a Cowles blade for 5 minutes. The pH is adjusted to 8.1 using a 20 wt.-% dimethyl ethanol amine aqueous solution (measured with Starter 300 pH Portable pH meter (Ohaus Corporation, Parsippany, New Jersey, USA)). The suspension was transferred to a mixing jar and a 2:1 weight ratio of 0.9 - 1.1 mm YTZ milling media (Fox Industries) (media:suspension) was added and the suspension was agitated using a LAU shaker (LAU disperser DAS 200 - LAU GmbH) for 5 hours. The 0.9 - 1.1 mm YTZ media was separated using gravity filtration. The as collected paste was transferred into another mixing jar and infused with 0.3 - 0.4 mm YTZ milling media in a 2:1 beads to paste weight ratio and agitated using a LAU shaker (LAU disperser DAS 200 - LAU GmbH) for 12 hours. The resulting final paste was filtered to remove the 0.3 - 0.4 mm media and used with no further modifications as pigment paste P10.

### Pigment paste P11

The black pigment paste P11 was prepared in an identical manner as pigment paste P10 except that the milling step - after having added the 0.3 - 0.4 mm YTZ milling media - was performed for only 2 hours instead of for 12 hours.

### Pigment paste P12

The black pigment paste P12 is produced by addition of dispersant 3, deionized water and propylene glycol n-propyl ether in a large mixing vessel, mixing well, and then adjusting the pH to 8.1 using a 20 wt.-% dimethyl ethanol amine aqueous solution. To this solution Monarch^{®} 1300 (Cabot) is added in small aliquots under agitation and mixed until homogeneity was achieved. This mixture is then diluted with deionized water and the pH is adjusted again in the same manner as described above to 8.1. The pigment paste is transferred to an Eiger Bead mill (EMI) containing 0.9 - 1.0 mm beads and milled to an energy of 180 Whr/kg.

**Table 4a - Pigment pastes P10 to P12**

| *Constituents* | *P10* | *P11* | *P12* |
|---|---|---|---|
| Black pigment 2 | 10 g | 10 g | - |
| Black pigment 3 | - | - | 8.75 g |
| Dispersant 1 | 14.46 g | 14.46 g | - |
| Dispersant 3 | - | - | 27.41 g |
| Propylene glycol n-butyl ether | 2.0 g | 2.0 g | - |
| Propylene glycol n-propyl ether | - | - | 7.3 g |
| Deionized water | 73.5 g | 73.5 g | 54.7 g |
| | | | |
| Pigment amount, based on total solid content [wt.-%] | 62.5 | 62.5 | 47.4 |

As outlined hereinbefore the black pigment 2 present in pigment pastes P10 and P11 is Chromofine^{®} A-1103 (Dainichiseika Chemicals). Black pigment 3 present in pigment paste P12 is Monarch^{®} 1300 (Cabot). Dispersants 1 and 2 have already been explained hereinbefore.

The pigment pastes P10 to P12 have been analyzed via particle size analysis after their preparation including the milling step. Additionally, their haze has been measured. Both measuring of the haze and measurement of the particle size characteristics indicated in Table 4b have been performed according to the methods disclosed in the 'Methods' section. The measured values are indicated in Table 4b.

**Table 4b - Haze and particle size characteristics of pigment pastes P10, P11 and P12**

| | *P10* | *P11* | *P12* |
|---|---|---|---|
| Haze | 4.9 | 6.5 | 2.2 |
| Volume average particle size [nm] | 685.9 | 2116 | 96.0 |
| Z-average particle size [nm] | 145.3 | 165.7 | 127.9 |
| d_{N,10%} [nm] | 84 | 101 | 79.3 |
| d_{N,50%} [nm] | 176 | 189 | 140 |
| d_{N,90%} [nm] | 399 | 357 | 246 |

### 2. Preparation of aqueous basecoat compositions

A number of aqueous basecoat compositions have been prepared by making use of one of the aqueous pigment pastes P2a and P10 to P12. The constituents listed in Table 5a have been mixed under stirring in a dissolver in the sequence given in said Table to prepare aqueous basecoat compositions WBC2c and WBC10 to WBC12.

A number of further aqueous basecoat compositions have been prepared by making use of one of the aqueous pigment pastes P1 to P7. The constituents listed in Tables 5 and 6 below have been mixed under stirring in a dissolver in the sequence given in said Tables to prepare aqueous basecoat compositions WBC1 to WBC7 and MWBC0, MWBC2a-d as well as MWBC4a-c. Each of the compositions according to Table 6 was reduced to a (spray) viscosity of 85.0 ± 5.0 P by means of deionized water (about 25-75 parts by weight of deionized water).

The resin blend mixture, to which it is referred to in the following, was prepared as follows: (i) 3.72 parts of Laponite^{®} powder (BYK Chemie) were added slowly to 90.08 parts of deionized water and mixed under high sheer with a Cowles blade for 45 minutes. 3.5 parts Pluracol^{®} P1010 Polyol (BASF) was then added under agitation. Once homogeneity was achieved, the contents are transferred from the mixing container to a storage container and rinsed with 2.7 parts of deionized water.

(ii) 16.7 parts of the solution described above in (i) was diluted with 8.8 parts of deionized water and then 16.0 parts of a polyurethane resin were added and mixed. (iii) Subsequently, 9.4 parts of an aqueous dispersion of a (meth)acrylic polymer (containing 44 wt.-% resin solids, 54.7 wt.-% deionized water and 1.33 wt.-% dimethyl ethanol amine), 12.34 parts of a mixture of 36.0 wt.-% of Daotan^{®} VTW 6462/36WA (Allnex) and 64.0 wt.-% of deionized water, and 7.41 parts Cymel^{®} 327 (Allnex) were added slowly under agitation. (iv) The resulting resin blend is reduced with 3.3 parts propylene glycol n-butyl ether, followed by introduction of 0.94 parts commercial additives. (v) 10.7 parts of dispersion of a branched polyester containing 42.3 wt.-% of resin solids and 53.7 wt.-% ethylene glycol monobutyl ether and 4.0 wt.-% of an aqueous solution containing dimethyl ethanol amine (20 wt.-%) was then added, followed by addition of 2.3 parts propylene glycol n-butyl ether, (vi) The pH of the resulting mixture is adjusted with an aqueous solution containing dimethyl ethanol amine (20 wt.-%) to 8.1 and the resulting product is used as resin blend mixture.

The polyurethane, to which it is referred to in the following, is an aqueous mixture containing 27.0 wt.-% polyurethane resin solids, 0.3 wt.-% n-butyl alcohol, 3.9 wt.-% methyl propyl ketone, 4.0 wt.-% n-methyl pyrrolidone and 64.8 wt.-% deionized water.

**Table 5a - Waterborne basecoat compositions WBC2c and WBC10 to WBC12**

| *Constituents* | *WBC2c* | *WBC10* | *WBC11* | *WBC12* |
|---|---|---|---|---|
| Resin blend mixture [parts by weight] | 215.6 | 14.17 | 34.10 | 34.10 |
| Polyurethane [parts by weight] | 48.88 | 3.21 | 7.71 | 4.62 |
| Deionized water [parts by weight] | 18.08 | 1.19 | 2.88 | 4.23 |
| Pigment paste [parts by weight] | 77.0 (P2a) | 5.10 (P10) | 12.25 (P11) | 14.00 (P12) |
| | | | | |
| Pigment amount, based on total solid content [wt.-%] | 8.8 | 8.8 | 8.8 | 8.8 |

**Table 5 - Waterborne basecoat compositions WBC1 to WBC7**

| *Constituents* | *WBC1* | *WBC2a* | *WBC2b* | *WBC3* | *WBC4* | *WBC5a* | *WBC5b* | *WBC6* | *WBC7* |
|---|---|---|---|---|---|---|---|---|---|
| Resin blend mixture [parts by weight] | 19.5 | 19.5 | 19.0 | 19.5 | 18.5 | 19.5 | 16.0 | 19.5 | 19.5 |
| Polyurethane [parts by weight] | 0.51 | 1.24 | 0.72 | 1.83 | - | 0.42 | - | 1.45 | 2.52 |
| Deionized water [parts by weight] | 0.65 | 3.17 | 0.12 | 6.55 | 1.09 | 7.54 | 5.90 | 5.92 | 6.77 |
| Pigment paste [parts by weight] | 9.75 (P1) | 6.50 (P2b) | 10.56 (P2b) | 2.54 (P3) | 10.83 (P4) | 2.95 (P5) | 8.47 (P5) | 3.54 (P6) | 1.63 (P7) |
| | | | | | | | | | |
| Pigment amount, based on total solid content [wt.-%] | 13.0 | 8.8 | 11.5 | 9.1 | 12.1 | 12.7 | 29.0 | 9.0 | 9.2 |

**Table 6 - Waterborne basecoat compositions (midcoats) MWBC0, MWBC2a-d and MWBC4a-c**

| *Constituents* | *MWBC0* | *MWBC2a* | *MWBC2b* | *MWBC2c* | *MWBC2d* | *MWBC4a* | *MWBC4b* | *MWBC4c* |
|---|---|---|---|---|---|---|---|---|
| Resin blend mixture [parts by weight] | 300 | 300 | 300 | 300 | 300 | 300 | 300 | 300 |
| Polyurethane [parts by weight] | 3.35 | 2.37 | 1.80 | 1.29 | - | 2.17 | 1.76 | 0.48 |
| Pigment paste [parts by weight] | - | 5.61 (P2b) | 9.0 (P2b) | 11.25 (P2b) | 16.86 (P2b) | 5.01 (P4) | 6.21 (P4) | 10.14 (P4) |
| | | | | | | | | |
| Pigment amount, based on total solid content [wt.-%] | 0 | 0.5 | 0.8 | 1.0 | 1.5 | 0.4 | 0.6 | 0.9 |

### 3. Preparation of solventborne topcoat compositions

A number of solventborne topcoat compositions have been prepared by making use of one of solventborne pigment pastes P8 and P9 or without a pigment paste in case of SBCC0 and TC0. The compositions are each 2K-compositions. The pigment paste P8 or P9 has been first mixed under stirring with the "A"-component, namely with E10CG081 G. The resulting mixture was then mixed with the "B"-component, which is a polyisocyanate having free NCO-groups (N52CG081). Both E10CG081 G and N52CG081 are commercially available (as ProGloss^{®} 2K4 from BASF Corporation, Coatings Division, USA). Solventborne topcoat compositions SBCC0, SBCC8a, SBCC8b, SBCC8c, SBCC8d, SBCC9a, SBCC9b, SBCC9c and SBCC9d were obtained in this manner as it is evident from Table 7. The pigment amount indicated is in each case based on the total solid content of components "A" plus "B".

**Table 7 - Solventborne topcoat compositions SBCC0, SBCC8a, SBCC8b, SBCC8c, SBCC8d, SBCC9a, SBCC9b, SBCC9c and SBCC9d**

| *Constituents* | *SBCC0* | *SBCC8a* | *SBCC8b* | *SBCC8c* | *SBCC8d* | *SBCC9a* | *SBCC9b* | *SBCC9c* | *SBCC9d* |
|---|---|---|---|---|---|---|---|---|---|
| "A"-component [parts by weight] | 146.70 | 146.70 | 146.70 | 146.70 | 146.70 | 146.70 | 146.70 | 146.70 | 146.70 |
| Pigment paste P8 [parts by weight] | - | 1.60 | 2.60 | 3.20 | 4.80 | - | - | - | - |
| Pigment paste P9 [parts by weight] | - | - | - | - | - | 1.60 | 2.60 | 3.20 | 4.80 |
| "B"-component [parts by weight] | 54.30 | 54.30 | 54.30 | 54.30 | 54.30 | 54.30 | 54.30 | 54.30 | 54.30 |
| | | | | | | | | | |
| Pigment amount, based on total solid content [wt.-%] | 0 | 0.10 | 0.16 | 0.20 | 0.30 | 0.10 | 0.16 | 0.20 | 0.30 |

### 4. Preparation of multilayer coating systems

### 4.1 Multilayer coating systems obtained by making use of the tinted solventborne topcoat compositions in a 2C1B-process

A steel panel bearing a cured primer coat was used as substrate. Aqueous basecoat WBC1, which was prepared by making use of pigment paste P1 containing an organic black pigment, or an aqueous basecoat WBC11, which was prepared by making use of pigment paste P11 containing an organic black pigment, or an aqueous basecoat WBC12, which was prepared by making use of pigment paste P12 containing a inorganic carbon black pigment, was spray-applied onto the primer coat in an amount that results in a dry film layer thickness of 18 to 20 µm later upon curing. After a flash-off at room temperature (23°C) for up to 10 minutes one of solventborne topcoat compositions SBCC0, SBCC8a, SBCC8b, SBCC8c, SBCC8d, SBCC9a, SBCC9b, SBCC9c and SBCC9d was spray-applied wet-on-wet onto the uncured basecoat film in an amount that results in a dry film layer thickness of 45 to 55 µm later upon curing. Then, both coating films applied were jointly cured for 30 minutes at 130°C.

### 4.2 Multilayer coating systems obtained by a 3C1B-process with tinted aqueous basecoat compositions applied as midcoats

A steel panel bearing a cured primer coat was used as substrate. Aqueous basecoat WBC1, which was prepared by making use of pigment paste P1 containing a black pigment, was spray-applied onto the primer coat as a first basecoat in an amount that results in a dry film layer thickness of 18 to 20 µm later upon curing. After a flash-off at room temperature (23°C) for up to 10 minutes, one of aqueous basecoat compositions MWBC0, MWBC2a, MWBC2b, MWBC2c, MWBC2d, MWBC4a, MWBC4b and MWBC4c was spray-applied wet-on-wet as a second basecoat onto the uncured first basecoat film in an amount that results in a dry film layer thickness of 9 to 11 µm later upon curing. In an additional control experiment no such second basecoat was applied, i.e. the first basecoat represents the only basecoat in this 2C1B-control experiment. After a flash-off at room temperature (23°C) for up to 10 minutes solventborne topcoat composition SBCC0 was spray-applied wet-on-wet as a clearcoat onto each of the uncured second basecoat film or on the first basecoat film in case of the control experiment in amount that results in a dry film layer thickness of 45 to 55 µm later upon curing. Then, all three (or two) coating films applied were jointly cured for 30 minutes at 130°C.

### 5. Properties of the substrates coated with the multilayer coating systems

**5.1** Each substrate coated with aqueous basecoat WBC1 or WBC11 or WBC12 and subsequently coated with one of solventborne topcoat compositions SBCC0, SBCC8a, SBCC8b, SBCC8c, SBCC8d, SBCC9a, SBCC9b, SBCC9c and SBCC9d as outlined in item **4.1** was subjected to an investigation of its blackness (My) and jetness (Mc) values as well as of its color values L*, a* and b*. Measurement of these values has been performed according to the methods disclosed in the 'Methods' section. The measured values are indicated in Tables 8a and 8b and 8c. In addition, each of the coated substrates was additionally visually reviewed (by a human) and graded (grades 1 to 6):
Grade 5 = no or essentially no color position improvement when compared to the control experiment (in this case SBCC0 applied on WBC1, WBC11 or WBC12 as SBCC0 does not contain any pigments and each of WBC1 and WBC11 contains an organic black pigment and WBC12 contains an inorganic carbon black pigment);
Grade 6 = coated substrate no longer appears black due to an overpowering undertone color; and
Grades 1 to 4 = color position improvements when compared to the control experiment with '1' being the most significant improvement.

**Table 8a - Color, jetness and blackness values of substrates coated with WBC1 and subsequently with a solventborne topcoat, part I**

| | *SBCC0 applied on WBC1* | *SBCC8a applied on WBC1* | *SBCC8b applied on WBC1* | *SBCC8c applied on WBC1* | *SBCC8d applied on WBC1* |
|---|---|---|---|---|---|
| L* | 1.98 | 1.41 | 1.21 | 1.14 | 1.01 |
| a* | 0.97 | 0.09 | -0.07 | -0.16 | -0.16 |
| b* | 0.93 | -0.19 | -0.61 | -0.87 | -1.15 |
| Mc | 247.3 | 283.2 | 298.9 | 307.3 | 318.6 |
| My | 265.8 | 280.6 | 287.2 | 289.9 | 295 |
| grade | 5; appears green | 3; appears slightly green | 1 | 1 | 6; appears deeply green |

**Table 8b - Color, jetness and blackness values of substrates coated with WBC1 and subsequently with a solventborne topcoat, part II**

| | *SBCC0 applied on WBC1* | *SBCC9a applied on WBC1* | *SBCC9b applied on WBC1* | *SBCC9c applied on WBC1* | *SBCC9d applied on WBC1* |
|---|---|---|---|---|---|
| L* | 1.98 | 1.56 | 1.47 | 1.47 | 1.36 |
| a* | 0.97 | 0.76 | 0.88 | 1.01 | 1.63 |
| b* | 0.93 | -0.92 | -1.85 | -2.46 | -4.03 |
| Mc | 247.3 | 284.4 | 297 | 301.8 | 314.8 |
| My | 265.8 | 276.2 | 278.9 | 278.8 | 282.1 |
| grade | 5; appears green | 3; neutral | 6; appears blue | 6; appears blue | 6; appears blue |

**Table 8c - Color, jetness and blackness values of substrates coated with WBC11 or WBC12 and subsequently with a solventborne topcoat**

| | *SBCC0 applied on WBC11* | *SBCC8d applied on WBC11* | *SBCC0 applied on WBC12* | *SBCC8d applied on WBC12* |
|---|---|---|---|---|
| L* | 3.3 | 1.68 | 1.18 | 0.8 |
| a* | 2.41 | -0.52 | -0.1 | 0 |
| b* | 0.44 | -2.18 | -0.73 | -1.37 |
| Mc | 233.4 | 300.7 | 302.4 | 335.1 |
| My | 243.7 | 273.1 | 288.3 | 305.2 |
| grade | 6; appears grainy red/brown | 2; appears slightly blue | 1; appears slightly yellow | 2; appears blue |

**5.2** Each substrate coated with aqueous basecoat WBC1 as first basecoat, subsequently coated with one of aqueous basecoat compositions MWBC0, MWBC2a, MWBC2b, MWBC2c, MWBC2d, MWBC4a, MWBC4b and MWBC4c as second basecoat and subsequently coated with solventborne topcoat composition SBCC0 as clearcoat as outlined in item **4.2** was subjected to an investigation of its blackness (My) and jetness (Mc) values as well as of its color values L*, a* and b*. Measurement of these values has been performed according to the methods disclosed in the 'Methods' section. The measured values are indicated in Tables 9a and 9b. In addition, each of the coated substrates was additionally visually reviewed (by a human) and graded (grades 1 to 6):
Grade 5 = no or essentially no color position improvement when compared to the control experiment (in this case SBCC0 applied on MWBC0 applied on WBC1 as neither SBCC0 nor MWBC0 does contain any pigments and WBC1 contains an organic black pigment);
Grade 6 = coated substrate no longer appears black due to an overpowering undertone color; and
Grades 1 to 4 = color position improvements when compared to the control experiment with '1' being the most significant improvement.

**Table 9a - Color, jetness and blackness values of substrates coated with WBC1, subsequently with a further aqueous basecoat and subsequently with SBCC0, part I**

| | *SBCC0 applied on WBC1 (no second basecoat)* | *SBCC0 applied on MWBC0 applied on WBC1* | *SBCC0 applied on MWBC2a applied on WBC1* | *SBCC0 applied on MWBC2b applied on WBC1* | *SBCC0 applied on MWBC2c applied on WBC1* | *SBCC0 applied on MWBC2d applied on WBC1* |
|---|---|---|---|---|---|---|
| L* | 1.98 | 2.1 | 1.69 | 1.55 | 1.59 | 1.72 |
| a* | 0.97 | 0.89 | 0.29 | 0.4 | 0.42 | 0.56 |
| b* | 0.93 | 1.02 | -0.52 | -1.03 | -1.23 | -0.58 |
| Mc | 247.3 | 244.8 | 278.2 | 288.3 | 289 | 276.6 |
| My | 265.8 | 263.4 | 272.2 | 276.6 | 275.5 | 272 |
| grade | 5; appears green | 5; appears green | 4 | 6; appears blue | 6; appears blue | 6; appears blue |

**Table 9b - Color, jetness and blackness values of substrates coated with WBC1, subsequently with a further aqueous basecoat and subsequently with SBCC0, part II**

| | *SBCC0 applied on WBC1 (no second basecoat)* | *SBCC0 applied on MWBC0 applied on WBC1* | *SBCC0 applied on MWBC4a applied on WBC1* | *SBCC0 applied on MWBC4b applied on WBC1* | *SBCC0 applied on MWBC4c applied on WBC1* |
|---|---|---|---|---|---|
| L* | 1.98 | 2.1 | 1.69 | 1.57 | 1.48 |
| a* | 0.97 | 0.89 | 0.66 | 0.77 | 0.95 |
| b* | 0.93 | 1.02 | -1.26 | -1.69 | -2.4 |
| Mc | 247.3 | 244.8 | 284.5 | 292.4 | 301.5 |
| My | 265.8 | 263.4 | 272.7 | 276.1 | 278.7 |
| grade | 5; appears green | 5; appears green | 3; appears slightly green | 2; appears blue | 6; appears blue |

### 6. Comparative experimental data

Further comparative experiments have been carried out in view of and in line with the disclosure of WO 2012/170230 A1:
Aqueous basecoat compositions containing a black pigment and a further additional pigment have been prepared by making blends of basecoat composition WBC1 (containing pigment paste P1, which in turn contains an organic black pigment) or WBC10 and one of basecoat compositions WBC2a or WBC2c (containing pigment paste P2b or P2a), WBC3 (containing pigment paste P3), WBC4 (containing pigment paste P4), WBC5a and WBC5b (each containing pigment paste P5) and WBC6 and WBC7 (containing pigment paste P6 or P7). In other words, basecoat compositions have been prepared which contain both a black pigment (from P1) and a further pigment (from P2b, P2a, P3 and P5 to P7) in one and the same basecoat composition.

The constituents listed in Tables 10 to 13, 13a and 13b below have been mixed under stirring in a dissolver in the sequence given in said Tables to prepare the aqueous basecoat composition blends as indicated therein. Tables 10 to 12 represent a first run of experiments. Tables 13, 13a as well as 13b represent a second experimental run. Basecoat composition blends B1 to B56 have been obtained in this manner.

A number of additional aqueous basecoat compositions have been prepared by making use of the aqueous pigment paste P11 alone or together with pigment paste P2a. The constituents listed in Table 13c have been mixed under stirring in a dissolver in the sequence given in said Table to prepare aqueous basecoat compositions RWBC1 to RWBC5.

Multilayer coating systems have then been obtained by a 2C1B-process with these aqueous basecoat composition blends according to WO 2012/170230 A1: A steel panel bearing a cured primer coat was used as substrate. Aqueous basecoat WBC1 or WBC10 or one of blends B1 to B56 or one of RWBC1 to RWBC5 was spray-applied onto the primer coat as a basecoat in an amount that results in a dry film layer thickness of 18 to 20 µm later upon curing. After a flash-off at room temperature (23°C) for up to 10 minutes solventborne topcoat composition SBCCO or TC0 was spray-applied wet-on-wet as a clearcoat onto each of the uncured basecoat films in amount that results in a dry film layer thickness of 45 to 55 µm later upon curing. Then, both coating films applied were jointly cured for 30 minutes at 130°C in each case.

Each coated substrate coated was then subjected to an investigation of its blackness (My) and jetness (Mc) values as well as of its color values L*, a* and b*. Measurement of these values has been performed according to the methods disclosed in the 'Methods' section. The measured values are indicated in Tables 14 to 18. In addition, each of the coated substrates was additionally visually reviewed (by a human) and graded (grades 1 to 6).
Grade 5 = no or essentially no color position improvement when compared to the control experiment (in this case SBCCO applied on WBC1 or WBC10 as SBCCO does not contain any pigments and WBC1 contains a black organic pigment);
Grade 6 = coated substrate no longer appears black due to an overpowering undertone color; and
Grades 1 to 4 = color position improvements when compared to the control experiment with '1' being the most significant improvement.

**Table 10 - Waterborne basecoat compositions blends B1 to B15**

| *Constituents* | *WBC1* | *B1* | *B2* | *B3* | *B4* | *B5* | *B6* | *B7* | *B8* | *B9* | *B10* | *B11* | *B12* | *B13* | *B14* | *B15* |
|---|---|---|---|---|---|---|---|---|---|---|---|---|---|---|---|---|
| WBC1 [pbw] | 20 | 20 | 20 | 20 | 20 | 20 | 20 | 20 | 20 | 20 | 20 | 20 | 20 | 20 | 20 | 20 |
| WBC2a [pbw] | - | 0.2 | 2 | 5 | 10 | - | - | - | - | - | - | - | - | - | - | - |
| WBC3 [pbw] | - | - | - | - | - | 0.2 | 2 | 5 | 10 | - | - | - | - | - | - | - |
| WBC5a [pbw] | - | - | - | - | - | - | - | - | - | 5 | 10 | 20 | 30 | 40 | 50 | 60 |
| WBC5b [pbw] | - | - | - | - | - | - | - | - | - | - | - | - | - | - | - | - |
| WBC6 [pbw] | - | - | - | - | - | - | - | - | - | - | - | - | - | - | - | - |
| WBC7 [pbw] | - | - | - | - | - | - | - | - | - | - | - | - | - | - | - | - |
| | | | | | | | | | | | | | | | | |
| Pigment amount* | 13.0 | 13.0 | 12.6 | 12.2 | 11.6 | 13.0 | 12.6 | 12.2 | 11.7 | 12.9 | 12.9 | 12.9 | 12.8 | 12.8 | 12.8 | 12.8 |
| Pigment amount (black pigment only)* | 13.0 | 12.9 | 11.8 | 10.4 | 8.7 | 12.9 | 11.8 | 10.4 | 8.7 | 10.4 | 8.7 | 6.5 | 5.2 | 4.3 | 3.7 | 3.3 |

| | | | | | | | | | | | | | | | | |
|---|---|---|---|---|---|---|---|---|---|---|---|---|---|---|---|---|
| *based on the total solid content [wt.-%] | | | | | | | | | | | | | | | | |

**Table 11 - Waterborne basecoat compositions blends B16 to B31**

| *Constituents* | *B16* | *B17* | *B18* | *B19* | *B20* | *B21* | *B22* | *B23* | *B24* | *B25* | *B26* | *B27* | *B28* | *B29* | *B30* | *B31* |
|---|---|---|---|---|---|---|---|---|---|---|---|---|---|---|---|---|
| WBC1 [pbw] | 20 | 20 | 20 | 20 | 20 | 20 | 20 | 20 | 20 | 20 | 20 | 20 | 20 | 20 | 20 | 20 |
| WBC2a [pbw] | - | - | - | - | - | - | - | - | - | - | - | - | - | - | - | - |
| WBC3 [pbw] | - | - | - | - | - | - | - | - | - | - | - | - | - | - | - | - |
| WBC5a [pbw] | 70 | 80 | 200 | - | - | - | - | - | - | - | - | - | - | - | - | - |
| WBC5b [pbw] | - | - | - | - | 2 | 10 | 20 | 30 | 40 | 50 | 60 | 80 | 100 | - | - | - |
| WBC6 [pbw] | - | - | - | - | - | - | - | - | - | - | - | - | - | 0.2 | 2 | 5 |
| WBC7 [pbw] | - | - | - | - | - | - | - | - | - | - | - | - | - | - | - | - |
| | | | | | | | | | | | | | | | | |
| Pigment amount* | 12.8 | 12.8 | 12.7 | 13.0 | 14.5 | 18.3 | 21.0 | 22.6 | 23.7 | 24.4 | 25.0 | 25.8 | 26.3 | 13.0 | 12.6 | 12.2 |
| Pigment amount (black pigment only)* | 2.9 | 2.6 | 1.2 | 1.3 | 11.8 | 8.7 | 6.5 | 5.2 | 4.3 | 3.7 | 3.3 | 2.6 | 2.2 | 12.9 | 11.8 | 10.4 |

| | | | | | | | | | | | | | | | | |
|---|---|---|---|---|---|---|---|---|---|---|---|---|---|---|---|---|
| *based on the total solid content [wt.-%] | | | | | | | | | | | | | | | | |

**Table 12 - Waterborne basecoat compositions blends B32 to B36**

| *Constituents* | *B32* | *B33* | *B34* | *B35* | *B36* |
|---|---|---|---|---|---|
| WBC1 [pbw] | 20 | 20 | 20 | 20 | 20 |
| WBC2a [pbw] | - | - | - | - | - |
| WBC3 [pbw] | - | - | - | - | - |
| WBC5a [pbw] | - | - | - | - | - |
| WBC5b [pbw] | - | - | - | - | - |
| WBC6 [pbw] | 10 | - | - | - | - |
| WBC7 [pbw] | - | 0.2 | 2 | 5 | 10 |
| | | | | | |
| Pigment amount* | 11.7 | 13.0 | 12.7 | 12.2 | 11.7 |
| Pigment amount (black pigment only)* | 8.7 | 12.9 | 11.8 | 10.4 | 8.7 |

| | | | | | |
|---|---|---|---|---|---|
| *based on the total solid content [wt.-%] | | | | | |

**Table 13 - Waterborne basecoat compositions blends B37 to B46**

| *Constituents* | *WBC1* | *B37* | *B38* | *B39* | *B40* | *B41* | *B42* | *B43* | *B44* | *B45* | *B46* |
|---|---|---|---|---|---|---|---|---|---|---|---|
| WBC1 [pbw] | 20 | 20 | 20 | 20 | 20 | 20 | 20 | 20 | 20 | 20 | 20 |
| WBC2a [pbw] | - | 0.2 | 1 | 2 | 4 | 6 | 8 | 10 | 20 | - | - |
| WBC4 [pbw] | - | - | - | - | - | - | - | - | - | 0.2 | 1 |
| | | | | | | | | | | | |
| Pigment amount* | 13.0 | 13.0 | 12.9 | 12.8 | 12.7 | 12.5 | 12.4 | 12.3 | 12.0 | 13.0 | 13.0 |
| Pigment amount (black pigment only)* | 13.0 | 12.9 | 12.4 | 11.8 | 10.8 | 10.0 | 9.3 | 8.7 | 6.5 | 12.9 | 12.4 |

| | | | | | | | | | | | |
|---|---|---|---|---|---|---|---|---|---|---|---|
| *based on the total solid content [wt.-%] | | | | | | | | | | | |

**Table 13a - Waterborne basecoat compositions blends B47 to B52**

| *Constituents* | *B47* | *B48* | *B49* | *B50* | *B51* | *B52* |
|---|---|---|---|---|---|---|
| WBC1 [pbw] | 20 | 20 | 20 | 20 | 20 | 20 |
| WBC2a [pbw] | - | - | - | - | - | - |
| WBC4 [pbw] | 2 | 4 | 6 | 8 | 10 | 20 |
| | | | | | | |
| Pigment amount* | 12.9 | 12.8 | 12.8 | 12.7 | 12.7 | 12.5 |
| Pigment amount (black pigment only)* | 11.8 | 10.8 | 10.0 | 9.3 | 8.7 | 6.5 |

| | | | | | | |
|---|---|---|---|---|---|---|
| *based on the total solid content [wt.-%] | | | | | | |

**Table 13b - Waterborne basecoat compositions blends B53 to B56**

| *Constituents* | *B53* | *B54* | *855* | *B56* |
|---|---|---|---|---|
| WBC10 [pbw] | 3.6 | 3.6 | 3.6 | 3.6 |
| WBC2c [pbw] | - | 3.6 | 18.0 | 36.0 |
| | | | | |
| Pigment amount* | 8.8 | 8.8 | 8.8 | 8.8 |
| Pigment amount (black pigment only)* | 8.8 | 4.4 | 1.5 | 0.8 |

| | | | | |
|---|---|---|---|---|
| *based on the total solid content [wt.-%] | | | | |

**Table 13c - Waterborne basecoat compositions RWBC1 to RWBC5**

| *Constituents* | *RWBC1* | *RWBC2* | *RWBC3* | *RWBC4* | *RWBC5* |
|---|---|---|---|---|---|
| Resin blend mixture [parts by weight] | 13.89 | 13.89 | 13.89 | 13.89 | 13.89 |
| Polyurethane [parts by weight] | 3.15 | 3.15 | 3.15 | 3.15 | 3.15 |
| Deionized water [parts by weight] | 1.16 | 1.16 | 1.16 | 1.16 | 1.16 |
| Pigment paste P10 [parts by weight] | 5.1 | 5.1 | 5.1 | 5.1 | 5.1 |
| Pigment paste P2a [parts by weight] | - | 2.65 | 5.10 | 10.2 | 15.3 |
| | | | | | |
| Pigment amount, based on total solid content [wt.-%] | 8.8 | 12.5 | 15.4 | 20.6 | 24.7 |
| Pigment amount (black pigment only), based on total solid content [wt.-%] | 8.8 | 8.2 | 7.7 | 6.9 | 6.2 |

**Table 14 - Color, jetness and blackness values of substrates coated with WBC1 or one of B1 to B13 and subsequently coated with SBCCO**

| | *WBC1* | *B1* | *B2* | *B3* | *B4* | *B5* | *B6* | *B7* | *B8* | *B9* | *B10* | *B11* | *B2* | *B13* |
|---|---|---|---|---|---|---|---|---|---|---|---|---|---|---|
| L* | 1.69 | 1.7 | 1.71 | 1.68 | 1.65 | 1.74 | 1.75 | 1.87 | 1.85 | 1.94 | 2.04 | 2.25 | 2.42 | 2.56 |
| a* | 1.23 | 0.74 | 0.23 | 0.21 | 0.12 | 0.49 | 0.31 | 0.21 | 0.27 | 1.26 | 1.28 | 1.26 | 1.23 | 1.24 |
| b* | 1.05 | 0.79 | 0.58 | 0.34 | 0.06 | 0.74 | 0.62 | 0.54 | 0.32 | 0.97 | 0.94 | 0.82 | 0.66 | 0.49 |
| Mc | 246.3 | 251.4 | 255.7 | 259.6 | 264.9 | 252.8 | 254.7 | 254.6 | 257.5 | 243.7 | 242.8 | 241.4 | 240.3 | 240.3 |
| My | 264.0 | 263.4 | 263.2 | 263.5 | 265 | 263 | 262.6 | 260.6 | 261 | 257.2 | 255.5 | 252 | 249.3 | 249.3 |
| grade | 5; green | 5; green | 5; green | 3; neutral | 4; blue | 5; green | 5; green, grainy | 4; grainy, greenish | 5; grainy | 5; green | 5; green | 5; grainy, green | 4; grainy, greenish | 4; grainy, bluish |

**Table 15 - Color, Mc and My values of substrates coated with WBC1 or one of B14 or B19 to B27 and subsequently coated with SBCCO**

| | *B14* | *B19* | *B20* | *B21* | *B22* | *B23* | *B24* | *B25* | *B26* | *B27* |
|---|---|---|---|---|---|---|---|---|---|---|
| L* | 2.72 | 2.04 | 2.2 | 2.49 | 3.24 | 3.7 | 4.15 | 4.66 | 4.94 | 5.77 |
| a* | 1.25 | 0.81 | 0.68 | 0.88 | 0.6 | 0.67 | 0.58 | 0.38 | 0.22 | -0.01 |
| b* | 0.38 | 0.93 | 0.81 | 0.75 | 0 | -0.55 | -1.17 | -1.9 | -2.68 | -4.49 |
| Mc | 239 | 244.1 | 244.5 | 240.1 | 238.1 | 236.2 | 234.8 | 233.4 | 233.9 | 232.1 |
| My | 245 | 255 | 252.6 | 248.1 | 238.6 | 233.6 | 229.1 | 224.6 | 222.2 | 215.8 |
| grade | 5; grainy | 5; green | 5; green | 4; grainy, greenish | 4; grainy, bluish | 5; grainy, blue | 6; blue | 6; blue | 6; blue | 6; blue |

**Table 16 - Color, Me and My values of substrates coated with WBC1 or one of B28 to B36 and subsequently coated with SBCCO**

| | *B28* | *B29* | *B30* | *B31* | *B32* | *B33* | *B34* | *B35* | *B36* |
|---|---|---|---|---|---|---|---|---|---|
| L* | 6.29 | 1.74 | 2.27 | 2.74 | 3.65 | 1.75 | 2.03 | 2.34 | 3.1 |
| a* | -0.15 | 1.27 | 0.78 | 0.09 | -1.18 | 1.28 | 1 | 0.66 | -0.03 |
| b* | -5.83 | 0.97 | 0.44 | 0.08 | 0.01 | 1.07 | 1.64 | 1.47 | 2.09 |
| Mc | 231.8 | 246.6 | 247.4 | 245.6 | 237.8 | 244.8 | 238.5 | 233.2 | 221.5 |
| My | 212.3 | 262.6 | 252.6 | 245.2 | 234.1 | 262.3 | 256.1 | 249.7 | 238.8 |
| grade | 6; blue | 4; green | 5; green | 6; green | 6; grainy, green | 4; green | 5; green | 5; green | 6; grainy, green |

**Table 17 - Color, jetness and blackness values of substrates coated with WBC1 or one of B37 to B49 and subsequently coated with SBCCO**

| | *WBC1* | *B37* | *B38* | *B39* | *B40* | *B41* | *B42* | *B43* | *B44* | *B45* | *B46* | *B47* | *B48* | *B49* |
|---|---|---|---|---|---|---|---|---|---|---|---|---|---|---|
| L* | 1.98 | 1.9 | 1.9 | 1.87 | 1.81 | 1.75 | 1.71 | 1.66 | 1.55 | 1.96 | 1.88 | 1.9 | 1.83 | 1.81 |
| a* | 0.97 | 0.57 | 0.2 | 0.07 | -0.13 | -0.16 | -0.19 | -0.22 | -0.18 | 0.3 | 0.11 | -0.12 | -0.3 | -0.39 |
| b* | 0.93 | 0.63 | 0.47 | 0.34 | 0.16 | -0.05 | -0.19 | -0.28 | -0.79 | 0.57 | 0.45 | 0.37 | 0.18 | 0.01 |
| Mc | 247.3 | 255.5 | 259.9 | 263.2 | 268.2 | 272.8 | 276.2 | 279.2 | 288.8 | 256.9 | 261 | 263.2 | 268.5 | 272.2 |
| My | 265.8 | 267.7 | 267.7 | 268.4 | 269.8 | 271.3 | 272.2 | 273.7 | 276.5 | 266.4 | 268.1 | 267.7 | 269.4 | 269.9 |
| grade | 5; green | 5; green | 5; green | 5; green | 5; green | 5; green | 5; green | 4; bluish | 5; grainy blue | 5; green | 5; green | 5; green | 5; green | 5; greenish |

**Table 18 - Color, jetness and blackness values of substrates coated with one of B50 to B52 and subsequently coated with SBCCO**

| | *B50* | *B51* | *B52* |
|---|---|---|---|
| L* | 1.76 | 1.71 | 1.57 |
| a* | -0.51 | -0.57 | -0.63 |
| b* | -0.08 | -0.16 | -0.57 |
| Mc | 275.2 | 278 | 288.4 |
| My | 271.1 | 272.2 | 276 |
| grade | 4; neutral green | 5; deep green | 5; bluish |

**Table 19 - Color, jetness and blackness values of substrates coated with one of B53 to B56 and subsequently coated with TC0**

| | *B53* | *B54* | *B55* | *B56* |
|---|---|---|---|---|
| L* | 1.49 | 1.33 | 1.21 | 1.27 |
| a* | 1.1 | 0.94 | 1.62 | 2.14 |
| b* | 0.08 | -0.92 | -2.92 | -4.19 |
| Mc | 269.9 | 291.31 | 313.6 | 317.4 |
| My | 278.2 | 283.2 | 287.3 | 285.3 |
| grade | 4; reddish | 5; blue, grainy | 6; blue, grainy | 6; blue, grainy |

**Table 20 - Color, jetness and blackness values of substrates coated with one of RWBC1 to RWBC5 and subsequently coated with TC0**

| | *RWBC1* | *RWBC2* | *RWBC3* | *RWBC4* | *RWBC5* |
|---|---|---|---|---|---|
| L* | 1.49 | 1.29 | 1.21 | 1.12 | 1.02 |
| a* | 1.1 | 0.74 | 0.68 | 0.6 | 0.57 |
| b* | 0.08 | -0.41 | -0.67 | -1 | -1.19 |
| Mc | 269.9 | 286.5 | 294 | 303.6 | 311.9 |
| My | 278.2 | 284.6 | 287.2 | 290.6 | 294.8 |
| grade | 4; reddish | 5; red/purple, grainy | 6; blue, grainy | 6; blue, grainy | 6; blue, grainy |

It can be seen that blends of pigments as present in basecoat composition blends B1 to B14 and B19 to, B53 to B56, RWBC1 to RWBC5 and as disclosed in WO 2012/170230 A1 may in principle be able to increase jetness (Me); however, this does not apply generally in all cases as can be seen when comparing B9 to B14 and B19 to B28 and B31 to B36 to WBC1 of the first run of experiments. Increased jetness was e.g. observed when comparing the coated substrate prepared by making use of blend B52 to a coated substrate prepared by making use of WBC1 of the second run of experiments (Me = 288.4 vs. Mc = 247.3). However, the visual appearance (color) of this coating system was still inferior compared to a system prepared from a basecoat containing carbon black (not shown).

Moreover, for preparing blend B52 aqueous basecoat WBC4 has been used, which contains low-haze pigment paste P4, which in turns contains blue pigment 2. When the same paste P4 is used to prepare a midcoat to be used as additional second aqueous basecoat composition in a 3C1B process - namely MWBC4b - slightly better jetness values were observed compared to using the blend, namely B52, in a 2C1B-process (Me = 292.4 for the system obtained by making use of MWBC4b vs. Mc = 288.4 for B52). However, in particular the visual appearance of the coating system obtained by making use of MWBC4b is surprisingly far superior compared to the system obtained by making use of B52 as the b*-value, obtained by making use of MWBC4b, was more negative (grades 2 vs. 5 and b* = -1.69 vs. b* = -0.57) leading to an overall more bluish impression. In addition, also the dM (undertone) value is better for the MWBC4b system as the blackness (My) value in both cases is about the same.

Even greater increases in jetness and in visual appearance were obtained by using a tinted clearcoat in a 2C1B-process (cf. item **5.1**).

## Claims

1. A method of preparing a multilayer coating system onto an optionally pre-coated substrate comprising at least steps (1) and (3a) or at least steps (1), (2) and (3b), namely
(1) applying a pigmented basecoat composition to an optionally pre-coated substrate and forming a first coating film on the optionally pre-coated substrate, wherein the basecoat composition comprises at least one organic black pigment,
(2) optionally applying a second pigmented basecoat composition different from the basecoat composition applied in step (1) to the first coating film present on the substrate obtained after step (1) and forming a second coating film adjacent to the first coating film, and
(3a) applying a coating composition different from the composition applied in step (1) and in optional step (2) to the first coating film present on the substrate obtained after step (1) and forming a second coating film adjacent to the first coating film in case optional step (2) is not performed, wherein the coating composition is a pigmented topcoat composition, or
(3b) applying a coating composition different from the composition applied in step (1) and in optional step (2) to the second coating film present on the substrate obtained after step (2) and forming a third coating film adjacent to the second coating film in case optional step (2) is performed, wherein the coating composition is a clearcoat composition,
wherein the second coating film obtained after step (3a) or the third coating film obtained after step (3b) is the outermost film of the formed multilayer coating system,
**characterized in that** neither the second basecoat composition applied in optional step (2) nor the coating composition applied in step (3a) or (3b) comprises any black pigments, and **in that** - in case steps (1), (2) and (3b) are performed - the second basecoat composition or - in case steps (1) and (3a) are performed - the topcoat composition comprises at least one non-black coloring pigment having a volume average particle size of <1000 nm in an amount in the range of from 0.01 to 7.50 wt.-%, based in each case on the total solid content of the respective composition, wherein said at least one non-black coloring pigment is in each case incorporated into the respective composition in the form of a pigment paste.

2. The method according to claim 1, **characterized in that** the at least one non-black coloring pigment present in either the second basecoat composition or in the topcoat composition is a blue pigment, preferably an organic blue pigment, which preferably is the only coloring pigment present in the second basecoat or in the topcoat composition.

3. The method according to claim 1 or 2, **characterized in that** the pigment paste containing the at least one non-black coloring pigment, which is used for preparing the second basecoat composition or for the topcoat composition has a haze of <20%, preferably of <15%, more preferably of <10%.

4. The method according to any of the preceding claims, **characterized in that** the at least one non-black coloring pigment present in either the second basecoat composition or in the topcoat composition has a volume average particle size in the range of from 10 nm to <950 nm, preferably of from 25 nm to 900 nm, more preferably of from 30 nm to 850 nm.

5. The method according to any of the preceding claims, **characterized in that** the at least one non-black coloring pigment present in either the second basecoat composition or in the topcoat composition has a Z-average particle size in the range of from 10 nm to 750 nm, preferably of from 25 nm to 500 nm, more preferably of from 30 nm to 350 nm.

6. The method according to any of the preceding claims, **characterized in that** the multilayer coating system obtained after curing has a jetness (Mc) of at least 250, preferably of at least 270, and/or has a jetness (Mc) value, which exceeds its blackness (My) value, preferably by at least 1%.

7. The method according to any of the preceding claims, **characterized in that** the at least one non-black coloring pigment is present in the second basecoat composition or in the topcoat composition in an amount in the range of from 0.01 to 5.00 wt.-%, based in each case on the total solid content of the respective composition, preferably in an amount in the range of from 0.01 to 3.50 wt.-%, based in each case on the total solid content of the respective composition.

8. The method according to any of the preceding claims, **characterized in that** the at least one non-black coloring pigment is present in the second basecoat composition in an amount in the range of from 0.10 to 5.00 wt.-%, based on the total solid content of the second basecoat composition or is present in the topcoat composition in an amount in the range of from 0.01 to 2.50 wt.-%, based on the total solid content of the topcoat composition.

9. The method according to any of the preceding claims, **characterized in that** the at least one organic black pigment present in the basecoat composition applied in step (1) is an IR-transparent organic black pigment, preferably at least one perylene and/or azomethine pigment.

10. The method according to any of the preceding claims, **characterized in that** the total solid content of the second basecoat composition or of the topcoat composition is in each case in the range of from 10 to 65 wt.-%, more preferably of from 15 to 60 wt.-%, even more preferably of from 20 to 50 wt.-%, in particular of from 25 to 45 wt.-%, in each case based on the total weight of the respective composition.

11. The method of any of the preceding claims, **characterized in that** optional step (2) is performed prior to curing the first coating film obtained after step (1), step (3a) is performed prior to curing the first coating film obtained after step (1) and step (3b) is performed prior to curing the second coating film obtained after step (2).

12. The method of claim 11, wherein the method comprises at least further step (4), namely
(4) jointly curing all coating films applied in steps (1) and (3a) or steps (1), (2) and (3b) to obtain a cured multilayer coating system comprising at least a first and second coating layer, the second coating layer being the outermost layer of the formed multilayer coating system or comprising at least a first, a second and a third coating layer, the third coating layer being the outermost layer of the formed multilayer coating system.

13. A multilayer coating system present on an optionally pre-coated substrate, **characterized in that** it is obtainable by the method according to any one of claims 1 to 12.

14. A coated substrate obtainable by the method according to any one of claims 1 to 12.

15. A use of a pigmented coating composition,
which does not comprise any black pigments, comprises at least one non-black coloring pigment having a volume average particle size of <1000 nm in an amount in the range of from 0.01 to 7.50 wt.-%, based on the total solid content of the coating composition, wherein said at least one non-black coloring pigment is incorporated into the coating composition in the form of a pigment paste,
in either step (2) as second basecoat composition or in step (3a) as topcoat composition of the method of preparing a multilayer coating system onto an optionally pre-coated substrate as defined in any one of claims 1 to 12
for increasing the jetness (Mc) of the multilayer coating system obtained after curing to such an extent that the jetness (Mc) exceeds the blackness (My) of the cured multilayer coating system.

## Patentansprüche

1. Verfahren zur Herstellung eines mehrschichtigen Beschichtungssystems auf einem gegebenenfalls vorbeschichteten Substrat, umfassend wenigstens Schritte (1) und (3a) oder wenigstens Schritte (1), (2) und (3b), nämlich
(1) Aufbringen einer pigmentierten Grundschichtzusammensetzung auf ein gegebenenfalls vorbeschichtetes Substrat und Bilden eines ersten Beschichtungsfilms auf dem gegebenenfalls vorbeschichteten Substrat, wobei die Grundschichtzusammensetzung wenigstens ein organisches schwarzes Pigment umfasst,
(2) gegebenenfalls Aufbringen einer zweiten pigmentierten Grundschichtzusammensetzung, die von der bei Schritt (1) aufgebrachten Grundschichtzusammensetzung verschieden ist, auf den nach Schritt (1) erhaltenen ersten auf dem Substrat vorhandenen Beschichtungsfilm und Bilden eines zweiten Beschichtungsfilms angrenzend an den ersten Beschichtungsfilm, und
(3a) Aufbringen einer Beschichtungszusammensetzung, die von der bei Schritt (1) und dem optionalen Schritt (2) aufgebrachten Zusammensetzung verschieden ist, auf den nach Schritt (1) erhaltenen ersten auf dem Substrat vorhandenen Beschichtungsfilm und Bilden eines zweiten Beschichtungsfilms angrenzend an den ersten Beschichtungsfilm in dem Fall, dass der optionale Schritt (2) nicht durchgeführt wird, wobei die Beschichtungszusammensetzung eine pigmentierte Deckschichtzusammensetzung ist, oder
(3b) Aufbringen einer Beschichtungszusammensetzung, die von der bei Schritt (1) und dem optionalen Schritt (2) aufgebrachten Zusammensetzung verschieden ist, auf den nach Schritt (2) erhaltenen zweiten auf dem Substrat vorhandenen Beschichtungsfilm und Bilden eines dritten Beschichtungsfilms angrenzend an den zweiten Beschichtungsfilm in dem Fall, dass der optionale Schritt (2) durchgeführt wird, wobei die Beschichtungszusammensetzung eine Klarlackzusammensetzung ist,
wobei der nach Schritt (3a) erhaltene zweite Beschichtungsfilm oder der der nach Schritt (3b) erhaltene dritte Beschichtungsfilm der äußerste Film des gebildeten mehrschichtigen Beschichtungssystems ist,
**dadurch gekennzeichnet, dass** weder die bei dem optionalen Schritt (2) aufgebrachte zweite Grundschichtzusammensetzung noch die bei Schritt (3a) oder (3b) aufgebrachte Beschichtungszusammensetzung schwarze Pigmente umfasst, und dass - falls die Schritte (1), (2) und (3b) durchgeführt werden - die zweite Grundschichtzusammensetzung oder - falls die Schritte (1) und (3a) durchgeführt werden - die Deckschichtzusammensetzung wenigstens ein nicht-schwarzes Farbpigment mit einer volumengemittelten Partikelgröße von <1000 nm in einer Menge in dem Bereich von 0,01 bis 7,50 Gew.-% umfasst, in jedem Fall bezogen auf den Gesamtfeststoffgehalt der entsprechenden Zusammensetzung, wobei in jedem Fall das wenigstens eine nicht-schwarze Farbpigment in der Form einer Pigmentpaste in die entsprechende Zusammensetzung einverleibt ist.

2. Verfahren gemäß Anspruch 1, **dadurch gekennzeichnet, dass** das wenigstens eine nicht-schwarze Farbpigment, das in entweder der zweiten Grundschichtzusammensetzung oder in der Deckschichtzusammensetzung vorhanden ist, ein blaues Pigment ist, vorzugsweise ein organisches blaues Pigment, das vorzugsweise das einzige in der zweiten Grundschicht oder in der Deckschichtzusammensetzung vorhandene Farbpigment ist.

3. Verfahren gemäß Anspruch 1 oder 2, **dadurch gekennzeichnet, dass** die Pigmentpaste, die das wenigstens eine nicht-schwarze Farbpigment enthält, die zur Herstellung der zweiten Grundschichtzusammensetzung oder für die Deckschichtzusammensetzung verwendet wird, eine Trübung von <20 %, vorzugsweise von <15 %, bevorzugter von <10 %, aufweist.

4. Verfahren gemäß einem der vorstehenden Ansprüche, **dadurch gekennzeichnet, dass** das wenigstens eine nicht-schwarze Farbpigment, das in entweder der zweiten Grundschichtzusammensetzung oder in der Deckschichtzusammensetzung vorhanden ist, eine volumengemittelte Partikelgröße in dem Bereich von 10 nm bis <950 nm, vorzugsweise von 25 nm bis 900 nm, bevorzugter von 30 nm bis 850 nm, aufweist.

5. Verfahren gemäß einem der vorstehenden Ansprüche, **dadurch gekennzeichnet, dass** das wenigstens eine nicht-schwarze Farbpigment, das in entweder der zweiten Grundschichtzusammensetzung oder in der Deckschichtzusammensetzung vorhanden ist, eine Z-gemittelte Partikelgröße in dem Bereich von 10 nm bis 750 nm, vorzugsweise von 25 nm bis 500 nm, bevorzugter von 30 nm bis 350 nm, aufweist.

6. Verfahren gemäß einem der vorstehenden Ansprüche, **dadurch gekennzeichnet, dass** das nach Härten erhaltene mehrschichtige Beschichtungssystem eine Farbtiefe (Mc) von wenigstens 250, vorzugsweise wenigstens 270, aufweist und/oder einen Wert der Farbtiefe (Mc) aufweist, der seine Dunkelstufe (My) übersteigt, vorzugsweise um wenigstens 1 %.

7. Verfahren gemäß einem der vorstehenden Ansprüche, **dadurch gekennzeichnet, dass** das wenigstens eine nicht-schwarze Farbpigment in der zweiten Grundschichtzusammensetzung oder in der Deckschichtzusammensetzung in einer Menge in dem Bereich von 0,01 bis 5,00 Gew.-% vorhanden ist, in jedem Fall bezogen auf den Gesamtfeststoffgehalt der entsprechenden Zusammensetzung, vorzugsweise in einer Menge in dem Bereich von 0,01 bis 3,50 Gew.-%, in jedem Fall bezogen auf den Gesamtfeststoffgehalt der entsprechenden Zusammensetzung.

8. Verfahren gemäß einem der vorstehenden Ansprüche, **dadurch gekennzeichnet, dass** das wenigstens eine nicht-schwarze Farbpigment in der zweiten Grundschichtzusammensetzung in einer Menge in dem Bereich von 0,10 bis 5,00 Gew.-% vorhanden ist, bezogen auf den Gesamtfeststoffgehalt der zweiten Grundschichtzusammensetzung, oder in der Deckschichtzusammensetzung in einer Menge in dem Bereich von 0,01 bis 2,50 Gew.-% vorhanden ist, bezogen auf den Gesamtfeststoffgehalt der Deckschichtzusammensetzung.

9. Verfahren gemäß einem der vorstehenden Ansprüche, **dadurch gekennzeichnet, dass** das wenigstens eine organische schwarze Pigment in der bei Schritt (1) aufgebrachten Grundschichtzusammensetzung ein IRtransparentes organisches schwarzes Pigment ist, vorzugsweise wenigstens ein Perylen- und/oder Azomethinpigment.

10. Verfahren gemäß einem der vorstehenden Ansprüche, **dadurch gekennzeichnet, dass** der Gesamtfeststoffgehalt der zweiten Grundschichtzusammensetzung oder der Deckschichtzusammensetzung in jedem Fall in dem Bereich von 10 bis 65 Gew.-% liegt, bevorzugter von 15 bis 60 Gew.-%, noch bevorzugter von 20 bis 50 Gew.-%, insbesondere von 25 bis 45 Gew.-%, in jedem Fall bezogen auf das Gesamtgewicht der entsprechenden Zusammensetzung.

11. Verfahren gemäß einem der vorstehenden Ansprüche, **dadurch gekennzeichnet, dass** der optionale Schritt (2) vor Härten des nach Schritt (1) erhaltenen ersten Beschichtungsfilms durchgeführt wird, Schritt (3a) vor Härten des nach Schritt (1) erhaltenen ersten Beschichtungsfilms durchgeführt wird und Schritt (3b) vor Härten des nach Schritt (2) erhaltenen zweiten Beschichtungsfilms durchgeführt wird.

12. Verfahren gemäß Anspruch 11, wobei das Verfahren wenigstens einen weiteren Schritt (4) umfasst, nämlich (4) gemeinsames Härten aller bei den Schritten (1) und (3a) oder den Schritten (1), (2) und (3b) aufgebrachten Beschichtungsfilme, um ein gehärtetes mehrschichtiges Beschichtungssystem zu erhalten, das wenigstens eine erste und eine zweite Beschichtungsschicht umfasst, wobei die zweite Beschichtungsschicht die äußerste Schicht des gebildeten mehrschichtigen Beschichtungssystems ist, oder das wenigstens eine erste, eine zweite und eine dritte Beschichtungsschicht umfasst, wobei die dritte Beschichtungsschicht die äußerste Schicht des gebildeten mehrschichtigen Beschichtungssystems ist.

13. Mehrschichtiges Beschichtungssystem, vorhanden auf einem gegebenenfalls vorbeschichteten Substrat, **dadurch gekennzeichnet, dass** es durch das Verfahren gemäß einem der Ansprüche 1 bis 12 erhältlich ist.

14. Beschichtetes Substrat, erhältlich durch das Verfahren gemäß einem der Ansprüche 1 bis 12.

15. Verwendung einer pigmentierten Beschichtungszusammensetzung,
die keine schwarzen Pigmente umfasst, wenigstens ein nicht-schwarzes Farbpigment mit einer volumengemittelten Partikelgröße von <1000 nm in einer Menge in dem Bereich von 0,01 bis 7,50 Gew.-% umfasst, bezogen auf den Gesamtfeststoffgehalt der Beschichtungszusammensetzung, wobei das wenigstens eine nicht-schwarze Farbpigment in der Form einer Pigmentpaste in die Beschichtungszusammensetzung einverleibt ist,
bei entweder Schritt (2) als zweite Grundschichtzusammensetzung oder bei Schritt (3a) als Deckschichtzusammensetzung des Verfahrens zur Herstellung eines mehrschichtigen Beschichtungssystems auf einem gegebenenfalls vorbeschichteten Substrat gemäß einem der Ansprüche 1 bis 12
zum Erhöhen der Farbtiefe (Mc) des nach Härten erhaltenen mehrschichtigen Beschichtungssystems zu einem solchen Maß, dass die Farbtiefe (Mc) den Dunkelwert (My) des gehärteten mehrschichtigen Beschichtungssystems übersteigt.

## Revendications

1. Procédé de préparation d'un système de revêtement multicouche sur un substrat éventuellement prérevêtu comprenant au moins les étapes (1) et (3a) ou au moins les étapes (1), (2) et (3b), à savoir
(1) application d'une composition de couche de base pigmentée sur un substrat éventuellement prérevêtu et formation d'un premier film de revêtement sur le substrat éventuellement prérevêtu, dans lequel la composition de couche de base comprend au moins un pigment noir organique,
(2) éventuellement application d'une deuxième composition de couche de base pigmentée différente de la composition de couche de base appliquée dans l'étape (1) sur le premier film de revêtement présent sur le substrat obtenu après l'étape (1) et formation d'un deuxième film de revêtement adjacent au premier film de revêtement, et
(3a) application d'une composition de revêtement différente de la composition appliquée dans l'étape (1) et dans l'étape facultative (2) sur le premier film de revêtement présent sur le substrat obtenu après l'étape (1) et formation d'un deuxième film de revêtement adjacent au premier film de revêtement dans le cas où l'étape facultative (2) n'est pas effectuée, dans lequel la composition de revêtement est une composition de couche supérieure pigmentée, ou
(3b) application d'une composition de revêtement différente de la composition appliquée dans l'étape (1) et dans l'étape facultative (2) sur le deuxième film de revêtement présent sur le substrat obtenu après l'étape (2) et formation d'un troisième film de revêtement adjacent au deuxième film de revêtement dans le cas où l'étape facultative (2) est effectuée, dans lequel la composition de revêtement est une composition de couche transparente,
dans lequel le deuxième film de revêtement obtenu après l'étape (3a) ou le troisième film de revêtement obtenu après l'étape (3b) est le film extérieur du système de revêtement multicouche formé,
**caractérisé en ce que** ni la deuxième composition de couche de base appliquée dans l'étape facultative (2), ni la composition de revêtement appliquée dans l'étape (3a) ou (3b) ne comprend des pigments noirs, et **en ce que**, dans le cas où les étapes (1), (2) et (3b) sont effectuées, la deuxième composition de couche de base ou, dans le cas où les étapes (1) et (3a) sont effectuées, la composition de couche supérieure comprend au moins un pigment colorant non noir ayant une taille de particule moyenne en volume < 1000 nm en une quantité dans la plage de 0,01 à 7,50 % en poids, dans chaque cas par rapport à la teneur totale en solides de la composition respective, dans lequel ledit au moins un pigment colorant non noir est dans chaque cas incorporé dans la composition respective sous la forme d'une pâte de pigment.

2. Procédé selon la revendication 1, **caractérisé en ce que** l'au moins un pigment colorant non noir présent dans la deuxième composition de couche de base ou dans la composition de couche supérieure est un pigment bleu, de préférence un pigment bleu organique, qui est de préférence le seul pigment colorant présent dans la deuxième couche de base ou dans la composition de couche supérieure.

3. Procédé selon la revendication 1 ou 2, **caractérisé en ce que** la pâte de pigment contenant l'au moins un pigment colorant non noir, qui est utilisé pour préparer la deuxième composition de couche de base ou pour la composition de couche supérieure présente un trouble < 20 %, de préférence < 15 %, plus préférablement < 10 %.

4. Procédé selon l'une quelconque des revendications précédentes, **caractérisé en ce que** l'au moins un pigment colorant non noir présent dans la deuxième composition de couche de base ou dans la composition de couche supérieure a une taille de particule moyenne en volume dans la plage de 10 nm à < 950 nm, de préférence de 25 nm à 900 nm, plus préférablement de 30 nm à 850 nm.

5. Procédé selon l'une quelconque des revendications précédentes, **caractérisé en ce que** l'au moins un pigment colorant non noir présent dans la deuxième composition de couche de base ou dans la composition de couche supérieure a une taille de particule moyenne Z dans la plage de 10 nm à 750 nm, de préférence de 25 nm à 500 nm, plus préférablement de 30 nm à 350 nm.

6. Procédé selon l'une quelconque des revendications précédentes, **caractérisé en ce que** le système de revêtement multicouche obtenu après durcissement a une profondeur de noir (Mc) d'au moins 250, de préférence d'au moins 270, et/ou a une valeur de profondeur de noir (Mc), qui dépasse la valeur d'indice de noir (My), de préférence d'au moins 1 %.

7. Procédé selon l'une quelconque des revendications précédentes, **caractérisé en ce que** l'au moins un pigment colorant non noir est présent dans la deuxième composition de couche de base ou dans la composition de couche supérieure en une quantité dans la plage de 0,01 à 5,00 % en poids, dans chaque cas par rapport à la teneur totale en solides de la composition respective, de préférence en une quantité dans la plage de 0,01 à 3,50 % en poids, dans chaque cas par rapport à la teneur totale en solides de la composition respective.

8. Procédé selon l'une quelconque des revendications précédentes, **caractérisé en ce que** l'au moins un pigment colorant non noir est présent dans la deuxième composition de couche de base en une quantité dans la plage de 0,10 à 5,00 % en poids, par rapport à la teneur totale en solides de la deuxième composition de couche de base ou est présent dans la composition de couche supérieure en une quantité dans la plage de 0,01 à 2,50 % en poids, par rapport à la teneur totale en solides de la composition de couche supérieure.

9. Procédé selon l'une quelconque des revendications précédentes, **caractérisé en ce que** l'au moins un pigment noir organique présent dans la composition de couche de base appliquée dans l'étape (1) est un pigment noir organique transparent aux IR, de préférence au moins un pigment de pérylène et/ou d'azométhine.

10. Procédé selon l'une quelconque des revendications précédentes, **caractérisé en ce que** la teneur totale en solides de la deuxième composition de couche de base ou de la composition de couche supérieure est dans chaque cas dans la plage de 10 à 65 % en poids, plus préférablement de 15 à 60 % en poids, encore plus préférablement de 20 à 50 % en poids, en particulier de 25 à 45 % en poids, dans chaque cas par rapport au poids total de la composition respective.

11. Procédé selon l'une quelconque des revendications précédentes, **caractérisé en ce que** l'étape facultative (2) est effectuée avant le durcissement du premier film de revêtement obtenu après l'étape (1), l'étape (3a) est effectuée avant le durcissement du premier film de revêtement obtenu après l'étape (1) et l'étape (3b) est effectuée avant le durcissement du deuxième film de revêtement obtenu après l'étape (2).

12. Procédé selon la revendication 11, le procédé comprenant au moins l'étape supplémentaire (4), à savoir (4) le durcissement conjoint de tous les films de revêtement appliqués dans les étapes (1) et (3a) ou les étapes (1), (2) et (3b) pour obtenir un système de revêtement multicouche durci comprenant au moins une première et une deuxième couche de revêtement, la deuxième couche de revêtement étant la couche extérieure du système de revêtement multicouche formé ou comprenant au moins une première, une deuxième et une troisième couche de revêtement, la troisième couche de revêtement étant la couche extérieure du système de revêtement multicouche formé.

13. Système de revêtement multicouche présent sur un substrat éventuellement prérevêtu, **caractérisé en ce qu'**il peut être obtenu par le procédé selon l'une quelconque des revendications 1 à 12.

14. Substrat revêtu pouvant être obtenu par le procédé selon l'une quelconque des revendications 1 à 12.

15. Utilisation d'une composition de revêtement pigmentée,
qui ne comprend pas de pigments noirs, comprend au moins un pigment colorant non noir ayant une taille de particule moyenne en volume < 1000 nm en une quantité dans la plage de 0,01 à 7,50 % en poids, par rapport à la teneur totale en solides de la composition de revêtement, dans laquelle ledit au moins un pigment colorant non noir est incorporé dans la composition de revêtement sous la forme d'une pâte de pigment,
dans l'étape (2) en tant que deuxième composition de couche de base ou dans l'étape (3a) en tant que composition de couche supérieure du procédé de préparation d'un système de revêtement multicouche sur un substrat éventuellement prérevêtu tel que défini dans l'une quelconque des revendications 1 à 12
pour augmenter la profondeur de noir (Mc) du système de revêtement multicouche obtenu après durcissement à un degré tel que la profondeur de noir (Mc) dépasse l'indice de noir (My) du système de revêtement multicouche durci.
